# EUROPEAN PATENT SPECIFICATION

(11) **EP 4 358 455 B1**
(45) Date of publication and mention of the grant of the patent: **31.12.2025**
(21) Application number: 22852060.7
(22) Date of filing: 29.07.2022
(51) Int. Cl.: H04L 5/00

(54) **SIDELINK POSITIONING REFERENCE SIGNAL SENDING METHOD AND APPARATUS, AND SIDELINK POSITIONING REFERENCE SIGNAL RECEIVING METHOD AND APPARATUS**
VERFAHREN UND VORRICHTUNG ZUM SENDEN VON SIDELINK-POSITIONIERUNGSREFERENZSIGNALEN SOWIE VERFAHREN UND VORRICHTUNG ZUM EMPFANGEN VON SIDELINK-POSITIONIERUNGSREFERENZSIGNALEN
APPAREIL ET PROCÉDÉ D'ENVOI DE SIGNAL DE RÉFÉRENCE DE POSITIONNEMENT DE LIAISON LATÉRALE, ET APPAREIL ET PROCÉDÉ DE RÉCEPTION DE SIGNAL DE RÉFÉRENCE DE POSITIONNEMENT DE LIAISON LATÉRALE

(30) Priority: 02.08.2021 CN 202110882902
(43) Date of publication of application: 24.04.2024
(73) Proprietor: CICT Connected and Intelligent Technologies Co., Ltd., Chongqing 400041 (CN)
(72) Inventor: ZHENG, Shilei, Chongqing 400040 (CN); LI, Chenxin, Chongqing 400040 (CN); HU, Jinling, Chongqing 400040 (CN); ZHAO, Rui, Chongqing 400040 (CN)
(74) Representative: Murgitroyd & Company
(86) International application number: PCT/CN2022/108949
(87) International publication number: WO 2023/011347

(56) References cited:
- EP-A1- 3 751 929
- WO-A1-2019/153129
- WO-A1-2021/066592
- WO-A1-2021/086093
- CN-A- 111 669 779
- CN-A- 112 583 553
- CN-A- 113 055 136
- US-A1- 2022 385 423
- ZTE: "Discussion on potential solutions for SL positioning", vol. RAN WG1, no. e-Meeting; 20220509 - 20220520, 29 April 2022 (2022-04-29), XP052153077, Retrieved from the Internet <URL:https://ftp.3gpp.org/tsg_ran/WG1_RL1/TSGR1_109-e/Docs/R1-2203624.zip R1-2203624 Discussion on potential solutions for SL positioning.docx> [retrieved on 20220429]
- VIVO: "Discussion on potential solutions for sidelink positioning", vol. RAN WG1, no. e-Meeting; 20220509 - 20220520, 29 April 2022 (2022-04-29), XP052153041, Retrieved from the Internet <URL:https://ftp.3gpp.org/tsg_ran/WG1_RL1/TSGR1_109-e/Docs/R1-2203566.zip R1-2203566 Discussion on potential solutions for sidelink positioning_final.docx> [retrieved on 20220429]

## Description

### TECHNICAL FIELD

The present application relates to the technical field of communications, and in particular, to a method and an apparatus for transmitting and receiving a sidelink positioning reference signal.

### BACKGROUND

3GPP Release 16 (3rd Generation Partnership Project Release 16, 3rd generation partnership project system standard release 16) performs research and standardization on NR positioning (uplink and downlink in a cellular network). In coverage of a cellular network, a base station transmits a cell-specific (cell-specific) downlink positioning reference signal (Positioning Reference Signal, PRS for short), and a terminal transmits an uplink sounding reference signal (sounding reference signal, SRS for short) used for positioning in uplink, to correspondingly measure a reference signal time difference (Reference Signal Time Difference, RSTD), or measure a reference signal received power (Reference Signal Received Power, RSRP) of the downlink positioning reference signal (Downlink Positioning Reference Signal, DL PRS), or measure a time difference between a time at which the terminal receives the DL PRS and a time at which the terminal transmits the SRS. The base station may measure a relative time of arrival (Relative Time of Arrival, RTOA) in uplink, an RSRP of the SRS, a time difference between a time at which a 5G base station (gNB) receives the SRS and a time at which the gNB transmits the DL PRS, an angle measurement value, and the like. A location of a user equipment (User Equipment, UE) is calculated by processing measurement values.

The work related to research and standardization of sidelink positioning (sidelink positioning) is being actively performed. However, sidelink is different from downlink and uplink (uplink). Because a scenario of gNB scheduling may not exist, a corresponding sidelink PRS needs to be redesigned based on a resource selection and a physical layer structure feature of the sidelink, and the like, to adapt to the sidelink positioning technology. In Release 16 or Release 17, no positioning related feature is introduced in sidelink. In addition, the physical layer channel structure of sidelink is different from those of the downlink and uplink, so that an existing DL PRS and SRS for positioning cannot be directly applicable to sidelink.
EP3751929A1 relates to the field of wireless communications. Disclosed are a user device, and a method for the inter-user-device sending and receiving of a positioning signal. In the present application, a first user device sends a positioning reference signal on a communication interface, and performs information transmission on a physical sidelink control channel (PSCCH) and/or a physical sidelink shared channel (PSSCH), wherein the information transmission on the PSCCH and/or PSSCH indicates a relevant attribute of the positioning reference signal. By means of direct communication between a user device and another user device, mutual positioning between the user devices is achieved, thereby achieving higher spectral efficiency and lower transmission delay, so that a higher positioning precision can be reached.
CN112583553A discloses a signal transmission method and a signal transmission device, which are used for realizing transmission of a straight-through link Sidelink positioning reference signal so asto realize positioning based on Sidelink. At a sending end, the signal sending method provided by the embodiment of the invention comprises the following steps: determining straight-through link positioning reference signal SPRS resource configuration information of a first terminal on a straight-through link; and sending the SPRS to a second terminal through a straight-through link according to the SPRS resource configuration information, so the second terminal performs positioning measurement based on the SPRS.
According to WO2021086093A1, a method for operation of a first device (100) in a wireless communication system is proposed. The method can comprise the steps of: determining a transmission parameter relating to a sidelink positioning reference signal (S-PRS) on the basis of information obtained by means of the first device (100); and transmitting the S-PRS on the basis of the transmission parameter.

### SUMMARY

A technical objective to be achieved in embodiments of the present application is to provide a method and an apparatus for transmitting and receiving a sidelink positioning reference signal, to solve a problem that positioning cannot be performed currently because no base station participates in scheduling and a physical layer channel structure form is different from a channel that has been known.

Technical solutions of embodiments of the present application are set out in the appended set of claims.

Compared with a related technology, the methods and apparatuses for transmitting and receiving a sidelink positioning reference signal provided in embodiments of the present application have at least the following beneficial effects.

In embodiments of the present application, a time-frequency resource configuration parameter of an SL PRS is acquired, and the SL PRS is carried on a first resource for transmitting and receiving based on the time-frequency resource configuration parameter. In addition, the SL PRS may cooperate with first indication information, facilitating transmission of the SL PRS in a case in which no base station participates in scheduling and a physical layer channel structure form is different from those on an existing uplink and downlink, and also facilitating positioning of sidelink based on the SL PRS.

### BRIEF DESCRIPTION OF THE DRAWINGS

FIG. 1 is a schematic flowchart of a method for transmitting a sidelink positioning reference signal SL PRS according to the present application.
FIG. 2 is a schematic diagram of a frequency domain pattern in repeated mapping.
FIG. 3 is a schematic diagram of configuration of a first preset dedicated resource set.
FIG. 4 is a schematic structural diagram of transmitting a PSCCH, a PSSCH, and an SL PRS on a first preset dedicated resource set.
FIG. 5 is a schematic diagram 1 in which a plurality of user terminals reuse a same first preset dedicated resource set.
FIG. 6 is a schematic diagram 2 in which a plurality of user terminals reuse a same first preset dedicated resource set.
FIG. 7 is a schematic diagram in which a first frequency domain bandwidth spans a plurality of resource pools.
FIG. 8 is a schematic diagram of mapping only an SL PRS to a first preset dedicated resource set.
FIG. 9 is a schematic diagram in which an SL PRS, a PSCCH, data information Data, and a PSSCH DMRS are not multiplexed.
FIG. 10 is a schematic diagram in which an SL PRS and a PSSCH DMRS are multiplexed.
FIG. 11 is a schematic diagram 1 in which a plurality of resource pools spanned by a first frequency domain bandwidth are all provided with a PSCCH and/or a PSSCH.
FIG. 12 is a schematic diagram 2 in which a plurality of resource pools spanned by a first frequency domain bandwidth are all provided with a PSCCH and/or a PSSCH.
FIG. 13 is a schematic flowchart of a method for receiving a sidelink positioning reference signal SL PRS according to the present application.
FIG. 14 is a schematic structural diagram of an apparatus for transmitting a sidelink positioning reference signal SL PRS according to the present application.
FIG. 15 is a schematic structural diagram of an apparatus for receiving a sidelink positioning reference signal SL PRS according to the present application.

### DETAILED DESCRIPTION OF THE EMBODIMENTS

To make the technical problems to be solved, technical solutions, and advantages of the present application clearer, the following describes the present application in detail with reference to the accompanying drawings and specific embodiments. In the following description, specific details such as specific configurations and components are provided only to help fully understand the embodiments of the present application. Therefore, a person skilled in the art should understand that various changes and modifications may be made to the embodiments described herein without departing from the scope of the present application. In addition, for clarity and simplicity, descriptions of known functions and constructions are omitted.

It should be understood that, "one embodiment" and "an embodiment" throughout this specification means that specific features, structures or characteristics related to embodiments may be included in at least one embodiment of the present application. Therefore, descriptions of "in one embodiment" or "in an embodiment" in various places throughout this specification are not necessarily referring to a same embodiment. In addition, the specific features, structures, or characteristics may be combined in one or more embodiments in any appropriate manner.

In the embodiments of the present application, it should be understood that, sequence numbers of the foregoing processes do not mean execution sequences. The execution sequences of the processes should be determined according to functions and internal logic of the processes, and should not be construed as any limitation on the implementation processes of the embodiments of the present disclosure.

It should be understood that, in this specification, the term "and/or" is merely an association relationship that describes associated objects, and represents that there may be three relationships. For example, A and/or B may represent three cases: only A exists, both A and B exist, and only B exists. In addition, the character "/" herein generally indicates an "or" relationship between the associated objects.

In the embodiments of the present application, it should be understood that, "B that is corresponding to A" means that B is associated with A, and B may be determined based on A. However, it should also be understood that, determining B based on A does not mean determining B based only on A, but instead B may be determined based on A and/or other information.

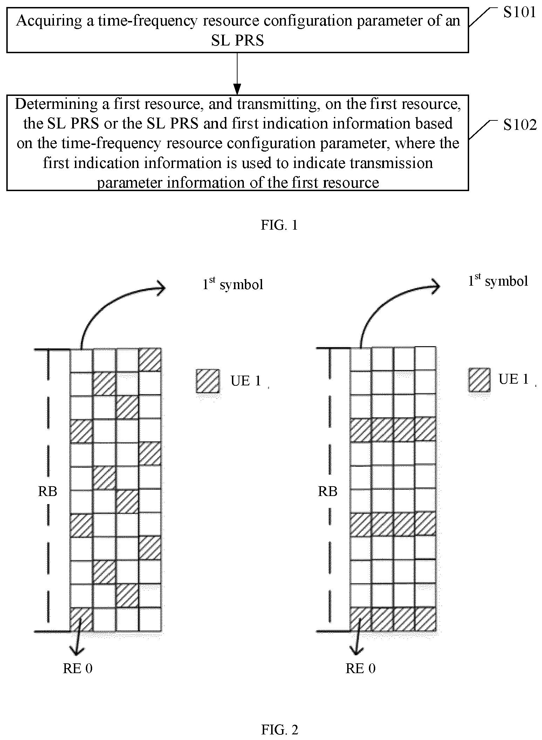

Referring to FIG. 1, an optional embodiment of the present application provides a method for transmitting a sidelink positioning reference signal SL PRS, which is applied to a first terminal and includes:
Step S101: acquiring a time-frequency resource configuration parameter of the SL PRS; and
Step S102: determining a first resource, and transmitting, on the first resource, the SL PRS or the SL PRS and first indication information based on the time-frequency resource configuration parameter, where the first indication information is used to indicate transmission parameter information of the first resource.

An optional embodiment of the present application provides a method for transmitting an SL PRS, which is applied to a first terminal and specifically includes: acquiring a resource configuration parameter of an SL PRS before transmission, to make configuration be performed on a corresponding resource based on the resource configuration parameter, and the SL PRS be carried in the corresponding resource; transmitting the SL PRS to a corresponding second terminal during resource transmission; and further determining a first resource that is used to transmit the SL PRS, to make the SL PRS be carried in the first resource for transmission, so as to ensure a feasibility of transmitting the SL PRS. During transmission of the SL PRS on the first resource, only the SL PRS may be transmitted, or both the SL PRS and first indication information used to indicate transmission parameter information of the first resource are transmitted. In a specific embodiment, when time-frequency resource configuration information is determined by both the first terminal and the second terminal, only the SL PRS may be transmitted for positioning of sidelink; when information determined only by the first terminal exists in the time-frequency resource configuration information of the SL PRS, the SL PRS and the first indication information need to be transmitted on the first resource for positioning of the sidelink, so that the second terminal accurately learns all time-frequency resource configuration information of the SL PRS based on the first indication information, so as to ensure accurate transmission of the SL PRS.

In conclusion, in this embodiment of the present application, the time-frequency resource configuration parameter of the SL PRS is acquired, and the SL PRS is carried on a predetermined first resource and transmitted based on the time-frequency resource configuration parameter. In addition, the SL PRS may cooperate with first indication information, facilitating transmission of the SL PRS in a case in which no base station participates in scheduling and a physical layer channel structure form is different from those on an existing uplink and downlink, and also facilitating positioning of sidelink based on the SL PRS.

According to the foregoing method for transmitting a sidelink positioning reference signal SL PRS, a first resource is determined from at least one of the following resource sets:
a first preset dedicated resource set; and
a physical sidelink shared channel PSSCH resource set.

In an optional embodiment of the present application, the first resource may be determined from a single resource set, or may be determined from a plurality of resource sets, where the resource set includes but is not limited to the first preset dedicated resource set, the PSSCH resource set, and the like. In a specific embodiment, when the first resource is jointly determined by using the first preset dedicated resource set and the PSSCH resource set, the SL PRS may be carried on a resource in the first preset dedicated resource set, and the first indication information is carried on a resource in the PSSCH resource set.

Optionally, based on configuration of the first preset dedicated resource set, impact on a legacy terminal may be avoided, interference to the SL PRS by another signal may also be reduced, and a relatively large frequency domain bandwidth may be allocated to the SL PRS, thereby helping ensure positioning accuracy.

It should be noted that the resource set herein may alternatively be represented by a resource pool or the like.

Specifically, according to the foregoing method for transmitting a sidelink positioning reference signal SL PRS, the time-frequency resource configuration parameter includes at least one of the following:
time domain symbol quantity configuration information of the SL PRS;
time domain symbol location configuration information of the SL PRS;
frequency domain pattern configuration information of the SL PRS;
first frequency domain starting PRB configuration information of the SL PRS;
frequency domain starting sub-channel configuration information of the SL PRS;
first frequency domain bandwidth configuration information of the SL PRS, where a granularity of a first frequency domain bandwidth is a sub-channel or a PRB;
first period configuration information of the SL PRS; and
sequence initialization ID configuration information of the SL PRS.

In a specific embodiment of the present application, the time-frequency resource configuration parameter of the SL PRS is described by using an example. In actual configuration, the time-frequency resource configuration parameter may include at least one of the foregoing configuration information.

It should be noted that each configuration information in the foregoing time-frequency resource configuration parameter is configured by using RRC signaling or preconfigured, or determined based on information about the first terminal. When the configuration information is determined based on the information about the first terminal, an indication needs to be performed by using the first indication information, so that a receiver end may accurately receive the SL PRS based on the first indication information.

It should be further noted that in a specific embodiment of the present application, the frequency domain pattern configuration information of the SL PRS is a comb size information and includes but is not limited to a comb size (comb size), a start mapping RE (Resource Element, RE for short) location of each PRB of a start symbol, and a mapping offset at an RE granularity on each symbol. For a case of repeated mapping on all symbols, only a start mapping RE location of each PRB in frequency domain is required. Referring to FIG. 2, the schematic diagram on the left side is obtained based on offset of a frequency domain pattern on the right side. For a user terminal (UE 1), a comb size is 4, a start mapping RE location (RE 0) on a PRB (or RB (Resource Block, resource block)) of a start symbol (1^{st} symbol) is index = 0, and an RE mapping offset on four symbols is {0, 2, 1, 3}.

It should be noted that a granularity of the first frequency domain bandwidth in the first frequency domain bandwidth configuration information of the SL PRS is a sub-channel or a PRB, and the time-frequency resource configuration parameter includes the first frequency domain starting PRB configuration information of the SL PRS, and may not include the frequency domain starting sub-channel configuration information of the SL PRS; or the time-frequency resource configuration parameter includes the frequency domain starting sub-channel configuration information of the SL PRS, and may not include the first frequency domain starting PRB configuration information of the SL PRS.

Further, according to the foregoing method for transmitting a sidelink positioning reference signal SL PRS, the first indication information is carried by using at least one of the following:
sidelink control information (Sidelink Control Information, SCI);
sidelink positioning information (Sidelink Positioning Information, SPI);
a media access control layer control element (Media access control layer Control Element, MAC CE);
radio resource control (Radio Resource Control, RRC) signaling;
a sidelink data packet;
a physical sidelink control channel (Physical Sidelink Control Channel, PSCCH);
a physical sidelink shared channel (Physical Sidelink Shared Channel, PSSCH);
a physical sidelink broadcast channel (Physical Sidelink Broadcast Channel, PSBCH);
a physical sidelink feedback channel (Physical Sidelink Feedback Channel, PSFCH);
a physical sidelink discover channel (Physical Sidelink Discover Channel, PSDCH); and
a physical sidelink positioning channel (Physical Sidelink Positioning Channel, PSPCH).

It should be noted herein that "SPI" is an indication information type used to indicate positioning related information on a sidelink, but a name of the indication information type used to indicate positioning related information is not limited to the SPI.

Specifically, according to the foregoing method for transmitting a sidelink positioning reference signal SL PRS, the transmission parameter information includes at least one of the following:
a number of time domain symbols of the SL PRS;
a time domain symbol location of the SL PRS;
a frequency domain pattern of the SL PRS;
a first frequency domain starting PRB of the SL PRS;
a frequency domain starting subchannel of the SL PRS;
a first frequency domain bandwidth of the SL PRS;
a first period of the SL PRS;
a sequence initialization ID of the SL PRS; and
identity information of the SL PRS.

It should be noted that, because the first indication information is used to indicate transmission parameter information of the first resource, a type of the transmission parameter information is corresponding to a type of a resource configuration parameter, and a quantity of types of transmission parameter information in actual transmission is corresponding to a quantity of types of the resource configuration parameter determined based on the information about the first terminal, thereby ensuring integrity of the first indication information during indication.

Optionally, according to the foregoing method for transmitting a sidelink positioning reference signal SL PRS, when the first resource is determined from the first preset dedicated resource set, a configuration parameter of the first preset dedicated resource set includes:
a symbol location occupied by the first preset dedicated resource set in each slot;
a second frequency domain starting PRB of the first preset dedicated resource set;
a second frequency domain bandwidth of the first preset dedicated resource set;
a second period of the first preset dedicated resource set;
a quantity of transmissions of the SL PRS in each period; and
a quantity of time domain resources between two adjacent SL PRSs in each period.

An occupying manner of the second frequency domain bandwidth includes at least one of fully occupying a current resource pool, spanning a plurality of resource pools, fully occupying an entire bandwidth part BWP, fully occupying an entire carrier, and occupying a preset quantity of PRBs.

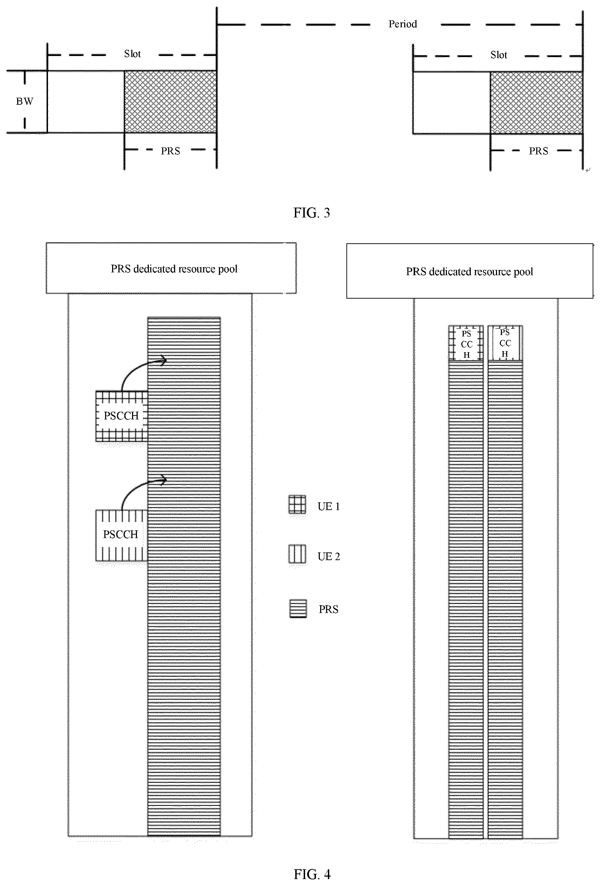

In an optional implementation of the present application, when the first resource needs to be determined from the first preset dedicated resource set, the first preset dedicated resource set is first configured, that is, a symbol location in a slot, a second frequency domain starting PRB, a second frequency domain bandwidth, a second period, a quantity of transmissions of the SL PRS in each period, and a quantity of time domain resources between two adjacent SL PRSs in each period corresponding to the first preset dedicated resource set are first acquired by means of RRC signaling configuration or pre configuration. As shown in FIG. 3, period is a period of a first preset dedicated resource, granularity is a slot, PRS is an SL PRS, and BW is a bandwidth. Configuration of the foregoing configuration parameters changes a structure of a slot, and has specific impact on calculation of a transport block size (Transport block Size, TBS for short). Therefore, a new information field needs to be introduced in a first stage SCI to indicate the number of symbols occupied by the SL PRS or specific overheads occurred when the TBS is calculated in a current slot.

Specifically, the occupation manner of the second frequency domain bandwidth is further described by using an example in this embodiment. The second frequency domain bandwidth may fully occupy a current resource pool, span a plurality of resource pools, fully occupy an entire bandwidth part BWP, fully occupy an entire carrier, and/or occupy a preset quantity of PRBs. In actual use, the second frequency domain bandwidth may be determined based on an actual occupied bandwidth of the SL PRS.

Optionally, according to the foregoing method for transmitting a sidelink positioning reference signal SL PRS, when a plurality of first terminals share the first preset dedicated resource set, the method includes any one of the following:
matching a mapping location of the SL PRS and/or a code division multiplexing manner used by the SL PRS with a user identity of a first terminal or a second terminal, where the code division multiplexing manner is an orthogonal coverage code OCC or a cyclic shift CS; or
matching a mapping location of the SL PRS and/or a code division multiplexing manner used by the SL PRS with a resource mapping location of SL PRS request signaling transmitted by a second terminal; or
transmitting the SL PRS and at least one of a PSCCH, a PSSCH, and a PSPCH in the first preset dedicated resource set; or
transmitting the SL PRS in the first preset dedicated resource set, and transmitting at least one of a PSCCH, a PSSCH, and a PSPCH in a remaining resource set of a slot in which the SL PRS is located or in a first slot spaced from the first preset dedicated resource set by a preset quantity of time domain resources.

The PSCCH, the PSSCH, or the PSPCH is used to carry user information of the first terminal and time-frequency resource information of the SL PRS, and the PSSCH or the PSPCH is further used to carry positioning information.

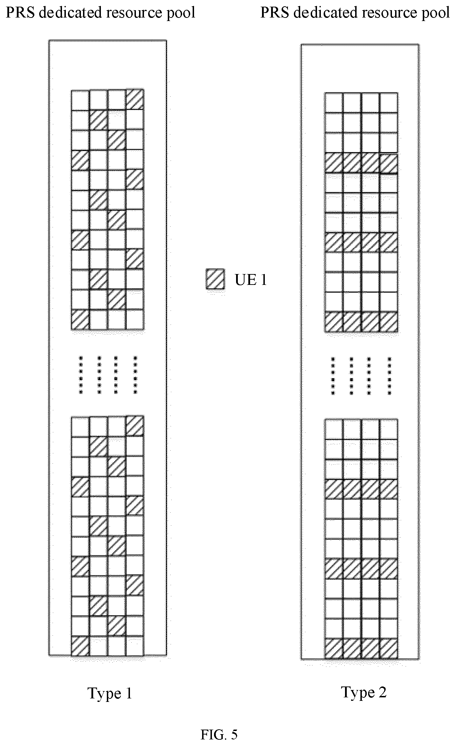

In another optional embodiment of the present application, a plurality of first terminals may reuse a same dedicated resource in the first preset dedicated resource set (PRS Dedicated Resource Pool). In this case, to ensure positioning accuracy, resources corresponding to different first terminals are orthogonal. For example, a correspondence between a mapping location of the SL PRS and/or a code division multiplexing manner used by the SL PRS and a resource mapping location of a terminal or SL PRS request signaling is established; or PSCCH, PSSCH, and/or PSPCH used to carry time-frequency resource information of the SL PRS and user information is transmitted in a remaining resource set of a same slot or in a first slot with an interval of a preset quantity of time domain resources, where the PSSCH or PSPCH is further used to carry positioning information (as shown in FIG. 4). Based on the foregoing operations, resources occupied by a plurality of user terminals may be orthogonal (as shown in FIG. 5). The user information includes but is not limited to a source ID of a user terminal.

It should be noted that whether the foregoing code division multiplexing manner is an orthogonal coverage code OCC or a cyclic shift CS is related to a sequence type used by the SL PRS. When a Gold sequence is used, the code division multiplexing manner is the OCC; when a ZC sequence is used, the code division multiplexing manner is the CS.

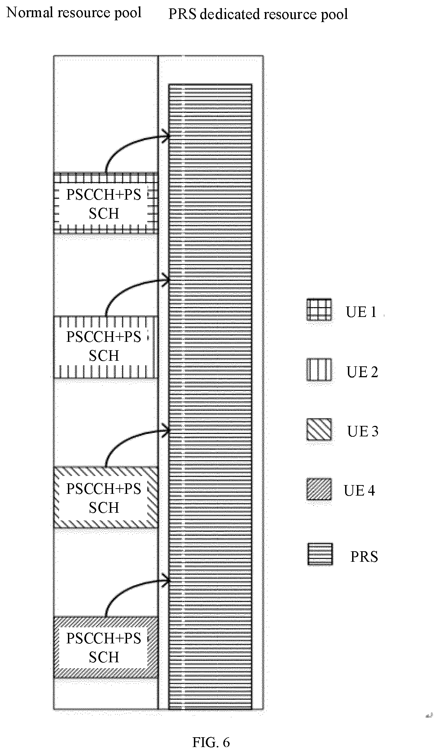

Specifically, the PSCCH, the PSSCH, and the PSPCH may be carried in the first preset dedicated resource set, a remaining resource of a slot in which the SL PRS is located or in the first slot spaced from the first preset dedicated resource set by a preset quantity of time domain resources, as shown in FIG. 6.

Specifically, according to the foregoing method for transmitting the sidelink positioning reference signal SL PRS, when the first resource is determined from the PSSCH resource set, the first frequency domain bandwidth of the SL PRS meets at least one of the following conditions:
the first frequency domain bandwidth is the same as a third frequency domain bandwidth of the PSSCH resource set;
the first frequency domain bandwidth fully occupies a current resource pool;
the first frequency domain bandwidth spans a plurality of resource pools;
the first frequency domain bandwidth fully occupies an entire BWP; and
the first frequency domain bandwidth fully occupies an entire carrier.

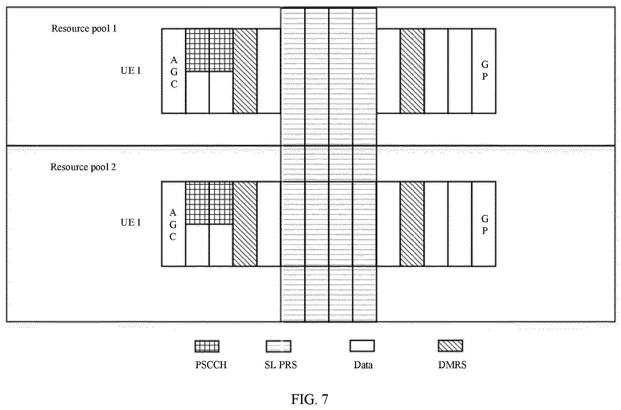

In another optional embodiment of the present application, when the first resource is determined from the PSSCH resource set, the first frequency domain bandwidth of the SL PRS is defined. The first frequency domain bandwidth may be the same as a third frequency domain bandwidth of the PSSCH resource set, fully occupy a current resource pool, span a plurality of resource pools, fully occupy an entire BWP, or occupy an entire carrier as required, which helps reduce resource waste while ensuring a transmission requirement. When the first frequency domain bandwidth fully occupies a current resource pool, spans a plurality of resource pools, fully occupies an entire BWP, or occupies an entire carrier (as shown in FIG. 7, where the first frequency domain bandwidth in FIG. 7 spans a plurality of resource pools (Resource pool), GP is guard period (guard period), and AGC is automatic gain control (automatic gain control)), so that a bandwidth occupied by the SL PRS is not limited, and positioning precision may be ensured to some extent.

According to the foregoing method for transmitting the sidelink positioning reference signal SL PRS, only the SL PRS is transmitted on the first resource, or the SL PRS and at least one of the following is transmitted on the first resource:
a physical sidelink shared channel demodulation reference signal PSSCH DMRS;
first SCI used for the decoding of a PSSCH;
second SCI used to indicate a transmission parameter and/or positioning information of the SL PRS;
dedicated information used to indicate a transmission parameter and/or positioning information of the SL PRS;
a MAC CE used to indicate a transmission parameter and/or positioning information of the SL PRS;
RRC signaling used to indicate a transmission parameter and/or positioning information of the SL PRS; and
data information, where the data information is capable of being used to indicate positioning information.

Optionally, when the first resource is determined from the PSSCH resource set, in addition to the SL PRS, other information related to the SL PRS is further transmitted on the first resource, for example, at least one of PSSCH DMRS; first SCI used for the decoding of a PSSCH; second SCI used to indicate a transmission parameter and/or positioning information of the SL PRS; dedicated information, a MAC CE, and/or RRC signaling; data information indicating positioning information, and the like, so that the second terminal configured to receive the first resource may accurately learn a location and positioning information of the SL PRS.

It should be noted that the first SCI, the second SCI, and the dedicated information may be at least one of a first stage SCI, a second stage SCI, or a third stage SCI dedicated to indicating a transmission parameter and/or positioning information.

According to the foregoing method for transmitting a sidelink positioning reference signal SL PRS, a mapping rule of the SL PRS on the first resource includes at least one of the following:
an orthogonal frequency division multiplexing OFDM symbol carrying the SL PRS being only used for mapping the SL PRS;
not mapping the SL PRS to an OFDM symbol that includes a first signal, where the first signal includes part or all of the first SCI, the PSSCH DMRS, a channel state information reference signal CSI RS, and a phase tracking reference signal PTRS;
when a resource conflict occurs between the SL PRS and part or all of the first signal, performing puncturing processing on the SL PRS, or performing puncturing processing on the first signal; and
when a resource conflict occurs between the SL PRS and the data information, performing puncturing processing or rate matching processing on the data information.

In a specific embodiment of the present application, when the first resource is determined from the PSSCH resource set, mapping of the SL PRS on the first resource should be performed according to a preset mapping rule, where the mapping rule includes as follows.

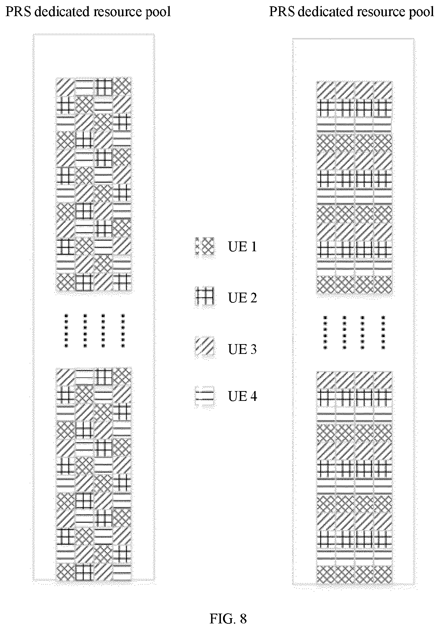

To avoid a resource conflict between the SL PRS and other information and reduction of a power spectral density (Power Spectral Density, PSD for short) of the SL PRS, only the SL PRS rather than the other information is mapped to an OFDM symbol that carries the SL PRS. FIG. 8 is a schematic diagram of mapping only an SL PRS to a first preset dedicated resource set.

At the same time, because a resource conflict is prone to generate between the SL PRS and the first signal, it should be avoided that the SL PRS is mapped to an OFDM symbol including the first signal. The first signal includes but is not limited to part or all of a first SCI, a PSSCH DMRS, a channel state information reference signal (Channel state information reference signal, CSI RS for short), and a phase tracking reference signal (Phase tracking reference signal, PTRS for short).

When other information is inevitably required to be mapped to an OFDM symbol that carries the SL PRS based on a resource limitation or the like, if a resource conflict occurs between the SL PRS and the other information, the SL PRS or the other information is processed based on a specific type of the other information. Specifically, the steps may be: when a resource conflict occurs between the SL PRS and part or all of the first signal, performing puncturing processing on the SL PRS, or performing puncturing processing on the first signal; when a resource conflict occurs between the SL PRS and the data information, performing puncturing processing or rate matching processing on the data information.

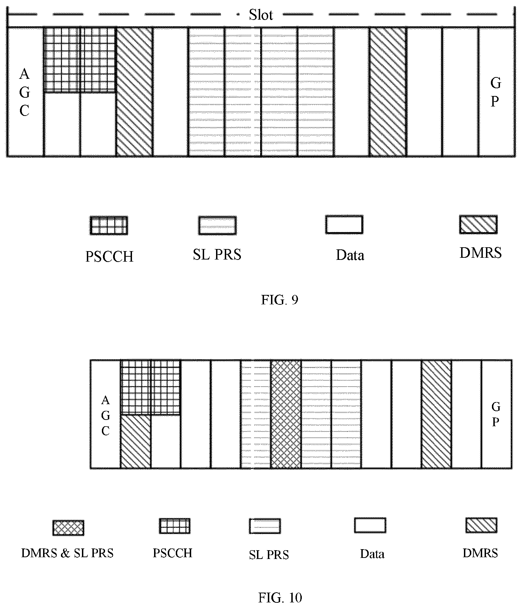

In a specific embodiment of the present application, a transmitting method used when the PSSCH carries the SL PRS, and the SL PRS and the PSSCH occupy a same bandwidth is used as an example for description. FIG. 9 is a schematic diagram in which an SL PRS, a PSCCH, data information Data, and a PSSCH DMRS are not multiplexed. FIG. 10 is a schematic diagram in which an SL PRS and a PSSCH DMRS are multiplexed. Specifically, when the PSSCH DMRS and the SL PRS are multiplexed, positioning may be directly performed by using the PSSCH DMRS or by using the PSSCH DMRS and the SL PRS. Further, when the PSSCH DMRS and the SL PRS are mapped to a same OFDM symbol, the PSSCH DMRS may be used as the SL PRS on the symbol.

Based on configuration of the SL PRS, compatibility of user terminals applicable to the R16 and the R17 is relatively good, and an original resource sensing mechanism is not damaged. Moreover, a first-stage SCI may not be modified, and it is not necessary to specifically set that a resource sensing reference signal in the R16 and the R17 must be the PSSCH DMRS.

It should be noted that the SL PRS may be consecutive in time domain, or may be discontinuous. In addition to being used for positioning, the SL PRS may be further used for assisting channel estimation. Specifically, for the foregoing method for transmitting a sidelink positioning reference signal SL PRS, when the first frequency domain bandwidth spans a plurality of resource pools, each corresponding resource pool is provided with a PSCCH and/or a PSSCH.

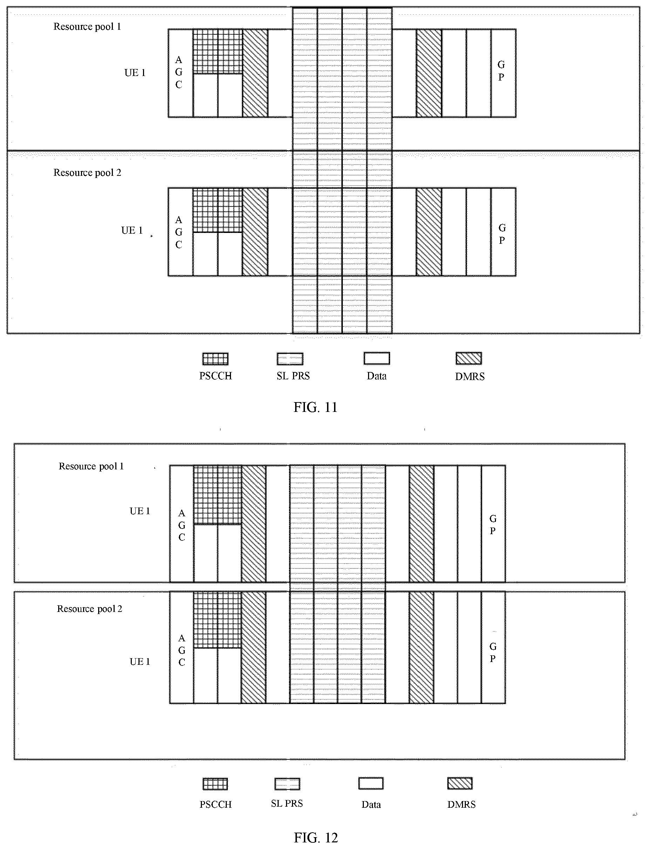

It should be noted herein that, when the first resource is determined from the PSSCH resource set, a plurality of resource pools spanned by the first frequency domain bandwidth are provided with a PSCCH and/or a PSSCH(as shown in FIG. 11 or FIG. 12), so as to accurately learn the complete SL PRS.

Optionally, according to the foregoing method for transmitting a sidelink positioning reference signal SL PRS, when the SL PRS and the first indication information are transmitted on the first resource, the first SCI is transmitted on the plurality of resource pools that are spanned; and a plurality of the first SCI respectively indicate transmission configuration parameters of the PSSCH resource set in respective resource pools.

It should be noted herein that, when the first frequency domain bandwidth spans a plurality of resource pools, and the first resource is further used to transmit the first indication information, the first SCI is transmitted in each resource pool; and a plurality of the first SCI respectively indicate transmission configuration parameters of the PSSCH resource set in respective resource pools, so as to accurately learn the complete SL PRS by decoding the PSSCH.

Optionally, according to the foregoing method for transmitting a sidelink positioning reference signal SL PRS, when the SL PRS and the first indication information are transmitted on the first resource, the first indication information is transmitted on at least one resource pool of the plurality of resource pools that are spanned; and when the first indication information is transmitted on more than one resource pool, transmission configuration parameters indicated by a plurality of the first indication information are the same.

It should be noted herein that, when the first frequency domain bandwidth spans a plurality of resource pools, and the first resource is further used to transmit the first indication information, the first indication information is transmitted on all the plurality of resource pools that are spanned; and transmission configuration parameters indicated by a plurality of the first indication information are the same, so that the complete SL PRS is accurately learned.

Specifically, according to the foregoing method for transmitting the sidelink positioning reference signal SL PRS, the SL PRS sequence initialization ID is determined based on cyclic redundancy check CRC information of a first stage SCI, or is determined based on a positioning priority of the first terminal.

In a specific embodiment of the present application, a manner of acquiring the SL PRS sequence initialization ID in the time-frequency resource configuration parameter is specified. The SL PRS sequence initialization ID may be determined based on the cyclic redundancy check CRC information of the first stage SCI, and is generated by an information bit corresponding to the SL PRS sequence initialization ID, or is determined based on a positioning priority of the first terminal.

Optionally, according to the foregoing method for transmitting the sidelink positioning reference signal SL PRS, the first frequency domain starting PRB or the frequency domain starting sub-channel is determined based on any one of the following:
a starting PRB location of a resource pool;
a third frequency domain starting PRB location of a bandwidth part BWP;
a frequency domain location of a resource block grid common reference point Point A;
a starting PRB location of a PSCCH or a PSSCH; and
a starting PRB location of a carrier.

In another optional embodiment of the present application, a manner of acquiring the first frequency domain starting PRB or the frequency domain starting sub-channel in the time-frequency resource configuration parameter of SL PRS is specified. The starting PRB location of a resource pool, the third frequency domain starting PRB location of a bandwidth part BWP, the frequency domain location of a resource block grid common reference point Point A, the starting PRB location of a PSCCH or a PSSCH, and the starting PRB location of a carrier may be all used as reference information of the first frequency domain starting PRB or the frequency domain starting sub-channel. During determining of the first frequency domain starting PRB or the frequency domain starting sub-channel, the reference information may be directly used as the first frequency domain starting PRB or the frequency domain starting sub-channel, or preset offset is performed on the foregoing reference information to obtain the first frequency domain starting PRB or the frequency domain starting sub-channel.

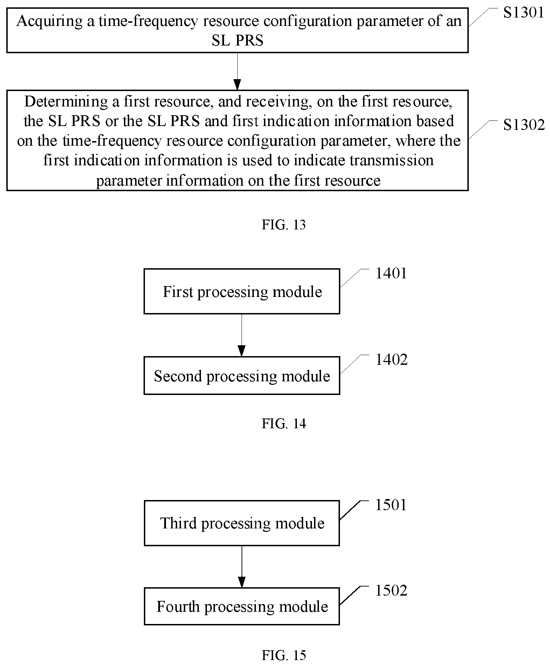

Referring to FIG. 13, another optional embodiment of the present application further provides a method for receiving a sidelink positioning reference signal SL PRS, which is applied to a second terminal and includes:
Step S1301: acquiring a time-frequency resource configuration parameter of the SL PRS; and
Step S1302: determining a first resource, and receiving, on the first resource, the SL PRS or the SL PRS and first indication information based on the time-frequency resource configuration parameter, where the first indication information is used to indicate transmission parameter information of the first resource.

An optional embodiment of the present application provides a method for receiving an SL PRS that is applied to a second terminal. The method specifically includes: first acquiring a resource configuration parameter of the SL PRS when receiving the SL PRS; then receiving the SL PRS on a corresponding first resource based on the resource configuration parameter after a first resource used to transmit the SL PRS is determined; and when receiving the SL PRS on a first resource, receiving the SL PRS only based on a type of a transmission resource, or receiving the SL PRS and first indication information that is used to indicate transmission parameter information of the first resource. In a specific embodiment, when time-frequency resource configuration information is determined by both a first terminal and the second terminal, only the SL PRS may be received for positioning of sidelink; when information determined only by the first terminal exists in the time-frequency resource configuration information of the SL PRS, the SL PRS and the first indication information need to be received on the first resource for positioning of the sidelink, so that the second terminal accurately learns all time-frequency resource configuration information of the SL PRS based on the first indication information, so as to ensure accurate transmission of the SL PRS.

In embodiments of the present application, a time-frequency resource configuration parameter of an SL PRS is acquired, and the SL PRS is received on a first resource based on the time-frequency resource configuration parameter. In addition, the SL PRS may cooperate with first indication information, facilitating transmission of the SL PRS in a case in which no base station participates in scheduling and a physical layer channel structure form is different from those on an existing uplink and downlink, and also facilitating positioning of sidelink based on the SL PRS.

According to the foregoing method for receiving a sidelink positioning reference signal SL PRS, the first resource belongs to at least one of the following resource sets:
a first preset dedicated resource set; and
a physical sidelink shared channel PSSCH resource set.

In an optional embodiment of the present application, the first resource may be determined from a single resource set, or may be determined from a plurality of resource sets, where the resource set includes but is not limited to the first preset dedicated resource set, the PSSCH resource set, and the like. In a specific embodiment, when the first resource is jointly determined by using the first preset dedicated resource set and the PSSCH resource set, the SL PRS may be carried on a resource in the first preset dedicated resource set, and the first indication information is carried on a resource in the PSSCH resource set.

Optionally, based on configuration of the first preset dedicated resource set, impact on a legacy terminal may be avoided, interference to the SL PRS by another signal may also be reduced, and a relatively large frequency domain bandwidth may be allocated to the SL PRS, thereby helping ensure positioning accuracy.

It should be noted that the resource set herein may alternatively be represented by a resource pool or the like.

Specifically, according to the foregoing method for receiving a sidelink positioning reference signal SL PRS, the time-frequency resource configuration parameter includes at least one of the following:
time domain symbol quantity configuration information of the SL PRS;
time domain symbol location configuration information of the SL PRS;
frequency domain pattern configuration information of the SL PRS;
first frequency domain starting PRB configuration information of the SL PRS;
frequency domain starting sub-channel configuration information of the SL PRS;
first frequency domain bandwidth configuration information of the SL PRS, where a granularity of a first frequency domain bandwidth is a sub-channel or a PRB;
first period configuration information of the SL PRS; and
sequence initialization ID configuration information of the SL PRS.

In a specific embodiment of the present application, the time-frequency resource configuration parameter of the SL PRS is described by using an example. In actual configuration, the time-frequency resource configuration parameter may include at least one of the foregoing configuration information.

It should be noted that, each of the foregoing time-frequency resource configuration parameters is configured by using RRC signaling or preconfigured, or determined based on indication of the first indication information. When it is determined based on the indication of the first indication information, it indicates that the part of information is determined based on information about the first terminal.

It should be further noted that in a specific embodiment of the present application, the frequency domain pattern configuration information of the SL PRS is in a comb size and includes but is not limited to a comb size (comb size), a start mapping RE location (Resource Element, RE for short) of each PRB of a start symbol, and a mapping offset at an RE granularity on each symbol. For a case of repeated mapping on all symbols, only a start mapping RE location in each PRB in frequency domain is required. Referring to FIG. 2, for a user terminal, a comb size is 4, a start mapping RE location on each PRB of a start symbol is index = 0, and a mapping offset on each symbol is {0, 2, 1, 3}.

It should be noted that a granularity of the first frequency domain bandwidth in the first frequency domain bandwidth configuration information of the SL PRS is a sub-channel or a PRB, and the time-frequency resource configuration parameter includes the first frequency domain starting PRB configuration information of the SL PRS, and may not include the frequency domain starting sub-channel configuration information of the SL PRS; or the time-frequency resource configuration parameter includes the frequency domain starting sub-channel configuration information of the SL PRS, and may not include the first frequency domain starting PRB configuration information of the SL PRS.

Optionally, according to the foregoing method for receiving a sidelink positioning reference signal SL PRS, the first indication information is carried by using at least one of the following:
sidelink control information SCI;
sidelink positioning information SPI;
a media access control layer control element MAC CE;
radio resource control RRC signaling;
a sidelink data packet;
a physical sidelink control channel PSCCH;
a physical sidelink shared channel PSSCH;
a physical sidelink broadcast channel PSBCH;
a physical sidelink feedback channel PSFCH;
a physical sidelink discover channel PSDCH; and
a physical sidelink positioning channel PSPCH.

It should be noted herein that "SPI" is an indication information type used to indicate positioning related information on a sidelink, but a name of the indication information type used to indicate positioning related information is not limited to the SPI.

Specifically, according to the foregoing method for receiving a sidelink positioning reference signal SL PRS, the transmission parameter information includes at least one of the following:
a number of time domain symbols of the SL PRS;
a time domain symbol location of the SL PRS;
a frequency domain pattern of the SL PRS;
a first frequency domain starting PRB of the SL PRS;
a frequency domain starting subchannel of the SL PRS;
a first frequency domain bandwidth of the SL PRS;
a first period of the SL PRS;
a sequence initialization ID of the SL PRS; and
identity information of the SL PRS.

It should be noted that, because the first indication information is used to indicate transmission parameter information of the first resource, a type of the transmission parameter information is corresponding to a type of a resource configuration parameter, and a quantity of types of transmission parameter information in actual transmission is corresponding to a quantity of types of the resource configuration parameter determined based on the information about the first terminal, thereby ensuring integrity of the first indication information during indication.

Further, according to the foregoing method for receiving a sidelink positioning reference signal SL PRS, when the first resource belongs to the first preset dedicated resource set, a configuration parameter of the first preset dedicated resource set includes:
a symbol location occupied by the first preset dedicated resource set in each slot;
a second frequency domain starting PRB of the first preset dedicated resource set;
a second frequency domain bandwidth of the first preset dedicated resource set;
a second period of the first preset dedicated resource set;
a quantity of transmissions of the SL PRS in each period; and
a quantity of time domain resources between two adjacent SL PRSs in each period.

An occupying manner of the second frequency domain bandwidth includes at least one of fully occupying a current resource pool, spanning a plurality of resource pools, fully occupying an entire bandwidth part BWP, fully occupying an entire carrier, and occupying a preset quantity of PRBs.

In an optional implementation of the present application, when the first resource needs to be determined from the first preset dedicated resource set, the first preset dedicated resource set is first configured, that is, a symbol location in a slot corresponding to the first preset dedicated resource set, a second frequency domain starting PRB, a second frequency domain bandwidth, a second period, a quantity of transmissions of the SL PRS in each period, and a quantity of time domain resources between two adjacent SL PRSs in each period are first acquired by means of RRC signaling configuration or preconfiguration, as shown in FIG. 3. Configuration of the foregoing configuration parameters changes a structure of a slot, and has specific impact on calculation of a TBS. Therefore, a new information field needs to be introduced in a first stage SCI to indicate a quantity of symbols occupied by the SL PRS or specific overheads occurred when the TBS is calculated in a current slot.

Specifically, the occupation manner of the second frequency domain bandwidth is further described by using an example in this embodiment. The second frequency domain bandwidth may fully occupy a current resource pool, span a plurality of resource pools, fully occupy an entire bandwidth part BWP, fully occupy an entire carrier, and/or occupy a preset quantity of PRBs. In actual use, the second frequency domain bandwidth may be determined based on an actual occupied bandwidth of the SL PRS.

Specifically, according to the foregoing method for receiving a sidelink positioning reference signal SL PRS, when the first resource belongs to a first preset dedicated resource set, the method further includes any one of the following:
determining, based on a user identity of the first terminal or the second terminal, a mapping location of the SL PRS and/or a code division multiplexing manner used by the SL PRS, where the code division multiplexing manner is an OCC or a CS; or
determining, based on a resource mapping location of SL PRS request signaling transmitted by the second terminal, a mapping location of the SL PRS and/or a code division multiplexing manner used by the SL PRS; or
determining user information of the first terminal and time-frequency resource information of the SL PRS based on a received PSCCH, PSSCH, or PSPCH, and/or determining positioning information based on the PSSCH or PSPCH. The PSCCH, the PSSCH, and the PSPCH are carried in the first preset dedicated resource set, a remaining resource of a slot in which the SL PRS is located or a first slot spaced from the first preset dedicated resource set by a preset quantity of time domain resources.

In another optional embodiment of the present application, a plurality of first terminals may reuse a same dedicated resource in the first preset dedicated resource set. In this case, to ensure positioning accuracy, resources corresponding to different first terminals are orthogonal, and therefore a plurality of resources are orthogonal during transmission according to a preset rule. Therefore, during receiving, a corresponding first resource needs to be determined again according to a preset rule, where a resource receiving manner corresponds to a resource transmitting manner. For example, when mapping is performed by using a user identity (as shown in FIG. 4), a mapping location of the SL PRS and/or a code division multiplexing manner used by the SL PRS is determined based on the user identity of the first terminal or the second terminal, so as to determine a corresponding SL PRS. When indication is performed by using at least one of a PSCCH, a PSSCH and a PSPCH (as shown in FIG. 5), the PSCCH, PSSCH, and/or PSPCH is acquired at a preset location, and user information of the first terminal and time-frequency resource information of the SL PRS are determined based on the PSCCH, PSSCH or PSPCH, and/or positioning information is determined based on the PSSCH or PSPCH. The user information includes but is not limited to a source ID of a user terminal.

Specifically, the PSCCH, the PSSCH, and the PSPCH may be carried in the first preset dedicated resource set, a remaining resource (a resource corresponding to a normal resource pool) of a slot in which the SL PRS is located or in the first slot spaced from the first preset dedicated resource set by a preset quantity of time domain resources, as shown in FIG. 6.

It should be noted that whether the foregoing code division multiplexing manner is an orthogonal coverage code OCC or a cyclic shift CS is related to a sequence type used by the SL PRS. When a Gold sequence is used, the code division multiplexing manner is the OCC; when a ZC sequence is used, the code division multiplexing manner is the CS.

Referring to FIG. 14, still another optional embodiment of the present application further provides an apparatus for transmitting a sidelink positioning reference signal SL PRS, which is applied to a first terminal and includes:
a first processing module 1401, configured to acquire a time-frequency resource configuration parameter of the SL PRS; and
a second processing module 1402, configured to: determine a first resource, and transmit, on the first resource, the SL PRS or the SL PRS and first indication information based on the time-frequency resource configuration parameter, where the first indication information is used to indicate transmission parameter information of the first resource.

According to the foregoing transmitting apparatus, the first resource is determined from at least one of the following resource sets:
a first preset dedicated resource set; and
a physical sidelink shared channel PSSCH resource set.

Specifically, according to the foregoing transmitting apparatus, the time-frequency resource configuration parameter includes at least one of the following:
time domain symbol quantity configuration information of the SL PRS; time domain symbol location configuration information of the SL PRS; frequency domain pattern configuration information of the SL PRS; first frequency domain starting PRB configuration information of the SL PRS; frequency domain starting sub-channel configuration information of the SL PRS; first frequency domain bandwidth configuration information of the SL PRS, where a granularity of a first frequency domain bandwidth is a sub-channel or a PRB; first period configuration information of the SL PRS; and
sequence initialization ID configuration information of the SL PRS.

Further, according to the foregoing transmitting apparatus, the first indication information is carried by using at least one of the following:
sidelink control information SCI; sidelink positioning information SPI; a media access control layer control element MAC CE; radio resource control RRC signaling; a sidelink data packet; a physical sidelink control channel PSCCH; a physical sidelink shared channel PSSCH; a physical sidelink broadcast channel PSBCH; a physical sidelink feedback channel PSFCH; a physical sidelink discover channel PSDCH; and a physical sidelink positioning channel PSPCH.

Specifically, according to the foregoing transmitting apparatus, the transmission parameter information includes at least one of the following:
a number of time domain symbols of the SL PRS; a time domain symbol location of the SL PRS; a frequency domain pattern of the SL PRS; a first frequency domain starting PRB of the SL PRS; a frequency domain starting subchannel of the SL PRS; a first frequency domain bandwidth of the SL PRS; a first period of the SL PRS; a sequence initialization ID of the SL PRS; and identity information of the SL PRS.

Optionally, according to the foregoing transmitting apparatus, when the first resource is determined from the first preset dedicated resource set, a configuration parameter of the first preset dedicated resource set includes:
a symbol location occupied by the first preset dedicated resource set in each slot; a second frequency domain starting PRB of the first preset dedicated resource set; a second frequency domain bandwidth of the first preset dedicated resource set; a second period of the first preset dedicated resource set; a quantity of transmissions of the SL PRS in each period; and a quantity of time domain resources between two adjacent SL PRSs in each period. An occupying manner of the second frequency domain bandwidth includes at least one of fully occupying a current resource pool, spanning a plurality of resource pools, fully occupying an entire bandwidth part BWP, fully occupying an entire carrier, and occupying a preset quantity of PRBs.

Optionally, when a plurality of first terminals share the first preset dedicated resource set, the foregoing transmitting apparatus further includes a fifth processing module, configured to:
match a mapping location of the SL PRS and/or a code division multiplexing manner used by the SL PRS with a user identity of a first terminal or a second terminal, where the code division multiplexing manner is an orthogonal coverage code OCC or a cyclic shift CS; or
match a mapping location of the SL PRS and/or a code division multiplexing manner used by the SL PRS with a resource mapping location of SL PRS request signaling transmitted by a second terminal; or
transmit the SL PRS and at least one of a PSCCH, a PSSCH, and a PSPCH on the first preset dedicated resource set; or
transmit the SL PRS in the first preset dedicated resource set, and transmit at least one of a PSCCH, a PSSCH, and a PSPCH in a remaining resource set of a slot in which the SL PRS is located or in a first slot spaced from the first preset dedicated resource set by a preset quantity of time domain resources.

The PSCCH, the PSSCH, or the PSPCH is used to carry user information indicating the first terminal and time-frequency resource information of the SL PRS, and the PSSCH or the PSPCH is further used to carry positioning information.

Specifically, according to the foregoing transmitting apparatus, when the first resource is determined from the PSSCH resource set, the first frequency domain bandwidth of the SL PRS meets at least one of the following conditions:
the first frequency domain bandwidth is the same as a third frequency domain bandwidth of the PSSCH resource set; the first frequency domain bandwidth fully occupies a current resource pool; the first frequency domain bandwidth spans a plurality of resource pools; the first frequency domain bandwidth fully occupies an entire BWP; and the first frequency domain bandwidth fully occupies an entire carrier.

According to the foregoing transmitting apparatus, only the SL PRS is transmitted on the first resource, or the SL PRS and at least one of the following is transmitted on the first resource:
a physical sidelink shared channel demodulation reference signal PSSCH DMRS; first SCI used for the decoding of a PSSCH; second SCI used to indicate a transmission parameter and/or positioning information of the SL PRS; dedicated information used to indicate a transmission parameter and/or positioning information of the SL PRS; a MAC CE used to indicate a transmission parameter and/or positioning information of the SL PRS; RRC signaling used to indicate a transmission parameter and/or positioning information of the SL PRS; and data information, where the data information is capable of being used to indicate positioning information.

According to the foregoing transmitting apparatus, a mapping rule of the SL PRS on the first resource includes at least one of the following:
an orthogonal frequency division multiplexing OFDM symbol carrying the SL PRS being only used for mapping the SL PRS;
not mapping the SL PRS to an OFDM symbol that includes a first signal, where the first signal includes part or all of the first SCI, the PSSCH DMRS, a channel state information reference signal CSI RS, and a phase tracking reference signal PTRS;
when a resource conflict occurs between the SL PRS and part or all of the first signal, performing puncturing processing on the SL PRS, or performing puncturing processing on the first signal; and
when a resource conflict occurs between the SL PRS and the data information, performing puncturing processing or rate matching processing on the data information.

Specifically, according to the foregoing transmitting apparatus, when the first frequency domain bandwidth spans a plurality of resource pools, each corresponding resource pool is provided with a PSCCH and/or a PSSCH.

Optionally, according to the foregoing transmitting apparatus, when the SL PRS and the first indication information are transmitted on the first resource, the first SCI is transmitted on the plurality of resource pools that are spanned; and a plurality of the first SCI respectively indicate transmission configuration parameters of the PSSCH resource set in respective resource pools.

Optionally, according to the foregoing transmitting apparatus, when the SL PRS and the first indication information are transmitted on the first resource, the first indication information is transmitted on at least one resource pool of the plurality of resource pools that are spanned: and when the first indication information is transmitted on more than one resource pool, transmission configuration parameters indicated by a plurality of the first indication information are the same.

Specifically, according to the foregoing transmitting apparatus, the SL PRS sequence initialization ID is determined based on cyclic redundancy check CRC information of a first stage SCI, or is determined based on a positioning priority of the first terminal.

Optionally, according to the foregoing transmitting apparatus, the first frequency domain starting PRB or the frequency domain starting sub-channel is determined based on any one of the following:
a starting PRB location of a resource pool; a third frequency domain starting PRB location of a bandwidth part BWP; a frequency domain location of a resource block grid common reference point Point A; a starting PRB location of a PSCCH or a PSSCH; and a starting PRB location of a carrier.

Embodiments of the transmitting apparatus in the present application are corresponding to the embodiments in the method for transmitting a sidelink positioning reference signal SL PRS applied to the first terminal. All implementation means in the foregoing embodiments of the method for transmitting a sidelink positioning reference signal SL PRS applied to the first terminal are applicable to the embodiments of the transmitting apparatus, and a same technical effect can be achieved.

Referring to FIG. 15, still another optional embodiment of the present application further provides an apparatus for receiving a sidelink positioning reference signal SL PRS, which is applied to a second terminal and includes:
a third processing module 1501, configured to acquire a time-frequency resource configuration parameter of the SL PRS; and
a fourth processing module 1502, configured to: determine a first resource, and receive, on the first resource, the SL PRS or the SL PRS and first indication information based on the time-frequency resource configuration parameter, where the first indication information is used to indicate transmission parameter information of the first resource.

According to the foregoing receiving apparatus, the first resource belongs to at least one of the following resource sets:
a first preset dedicated resource set; and
a physical sidelink shared channel PSSCH resource set.

Specifically, according to the foregoing receiving apparatus, the time-frequency resource configuration parameter includes at least one of the following:
time domain symbol quantity configuration information of the SL PRS; time domain symbol location configuration information of the SL PRS; frequency domain pattern configuration information of the SL PRS; first frequency domain starting PRB configuration information of the SL PRS; frequency domain starting sub-channel configuration information of the SL PRS; first frequency domain bandwidth configuration information of the SL PRS, where a granularity of a first frequency domain bandwidth is a sub-channel or a PRB; first period configuration information of the SL PRS; and sequence initialization ID configuration information of the SL PRS.

Optionally, according to the foregoing receiving apparatus, the first indication information is carried by using at least one of the following:
sidelink control information SCI; sidelink positioning information SPI; a media access control layer control element MAC CE; radio resource control RRC signaling; a sidelink data packet; a physical sidelink control channel PSCCH; a physical sidelink shared channel PSSCH; a physical sidelink broadcast channel PSBCH; a physical sidelink feedback channel PSFCH; a physical sidelink discover channel PSDCH; and a physical sidelink positioning channel PSPCH.

Specifically, according to the foregoing receiving apparatus, the transmission parameter information includes at least one of the following:
a number of time domain symbols of the SL PRS; a time domain symbol location of the SL PRS; a frequency domain pattern of the SL PRS; a first frequency domain starting PRB of the SL PRS; a frequency domain starting subchannel of the SL PRS; a first frequency domain bandwidth of the SL PRS; a first period of the SL PRS; a sequence initialization ID of the SL PRS; and identity information of the SL PRS.

Further, according to the foregoing receiving apparatus, when the first resource belongs to the first preset dedicated resource set, a configuration parameter of the first preset dedicated resource set includes:
a symbol location occupied by the first preset dedicated resource set in each slot; a second frequency domain starting PRB of the first preset dedicated resource set; a second frequency domain bandwidth of the first preset dedicated resource set; a second period of the first preset dedicated resource set; a quantity of transmissions of the SL PRS in each period; and a quantity of time domain resources between two adjacent SL PRSs in each period. An occupying manner of the second frequency domain bandwidth includes at least one of fully occupying a current resource pool, spanning a plurality of resource pools, fully occupying an entire bandwidth part BWP, fully occupying an entire carrier, and occupying a preset quantity of PRBs.

Specifically, when the first resource belongs to the first preset dedicated resource set, the foregoing receiving apparatus further includes a sixth processing module, configured to:
determine, based on a user identity of a first terminal or the second terminal, a mapping location of the SL PRS and/or a code division multiplexing manner used by the SL PRS, where the code division multiplexing manner is an OCC or a CS; or
determine, based on a resource mapping location of SL PRS request signaling transmitted by the second terminal, a mapping location of the SL PRS and/or a code division multiplexing manner used by the SL PRS; or
determine user information of the first terminal and time-frequency resource information of the SL PRS based on a received PSCCH, PSSCH, or PSPCH, and/or determine positioning information based on the PSSCH or PSPCH. The PSCCH, the PSSCH, and the PSPCH are carried in the first preset dedicated resource set, a remaining resource of a slot in which the SL PRS is located or a first slot spaced from the first preset dedicated resource set by a preset quantity of time domain resources.

Embodiments of the receiving apparatus in the present application are corresponding to the embodiments in the method for receiving a sidelink positioning reference signal SL PRS applied to the second terminal. All implementation means in the foregoing embodiments of the method for receiving a sidelink positioning reference signal SL PRS applied to the second terminal are applicable to the embodiments of the receiving apparatus, and a same technical effect can be achieved.

Another optional embodiment of the present application further provides a computer-readable storage medium, on which a computer program is stored. When the computer program is executed by a processor, the method for transmitting a sidelink positioning reference signal SL PRS applied to a first terminal, or the method for receiving a sidelink positioning reference signal SL PRS applied to a second terminal is implemented.

In addition, reference numerals and/or letters may be repeated in different examples in the present application. Such repetition is for the purpose of simplification and clarity, and does not in itself indicate a relationship between various embodiments and/or settings discussed.

It should be further noted that in this specification, relational terms such as "first" and "second" are only used to distinguish one entity or operation from another, and do not necessarily require or imply that any actual relationship or sequence exists between these entities or operations. Moreover, the term "comprise", "include", or any other variant thereof is intended to cover a non-exclusive inclusion.

It should be noted that the foregoing module division is merely a logical function division. In actual implementation, all or a part of the modules may be integrated into one physical entity, or may be physically separated. In addition, these modules may be implemented in a form of software invoked by a processing element; or may be all implemented in a form of hardware; or some modules may be implemented in a form of software invoked by a processing element, and some modules may be implemented in a form of hardware. For example, a determining module may be a separately disposed processing element, or may be integrated into a chip of the foregoing apparatus for implementation. In addition, the determining module may be stored in a memory of the foregoing apparatus in a form of program code, and a processing element of the foregoing apparatus invokes the program code and executes a function of the determining module. An implementation of another module is similar. In addition, all or a part of the modules may be integrated together, or may be independently implemented. The processing element herein may be an integrated circuit having a signal processing capability. In an implementation process, the steps in the foregoing methods or the foregoing modules may be completed by an integrated logic circuit of hardware in the processor element or instructions in a form of software.

For example, modules, units, subunits, or submodules may be configured to implement one or more integrated circuits in the foregoing methods, for example, one or more application specific integrated circuits (Application Specific Integrated Circuit, ASIC), or one or more digital signal processors (Digital Signal Processor, DSP), or one or more field programmable gate arrays (Field Programmable Gate Array, FPGA), or the like. For another example, when a module is implemented in the form of program code being scheduled by a processing element, the processing element may be a general-purpose processor, for example, a central processing unit (Central Processing Unit, CPU) or another processor capable of invoking the program code. For another example, these modules may be integrated together and implemented in a form of a system-on-a-chip (system-on-a-chip, SOC).

The terms "first", "second" and the like in this specification and claims of the present disclosure are used to distinguish between similar objects, rather than to describe a particular order or a sequential order. It should be understood that the data used in this way may be interchangeable under appropriate circumstances such that embodiments of the present disclosure described herein are implemented, for example, in an order different from that illustrated or described herein. In addition, the terms "include" and "have" and any other variants thereof are intended to cover the non-exclusive inclusion. For example, a process, method, system, product, or device that includes a series of steps or units is not necessarily limited to those expressly listed steps or units, but may include other steps or units not expressly listed or inherent to such process, method, product, or device. In addition, in the specification and claims, "and/or" is used to indicate at least one of connected objects. For example, A and/or B and/or C represents the following seven cases: Only A is included, only B is included, only C is included, both A and B exist, both B and C exist, both A and C exist, and A, B and C all exist. Similarly, "at least one of A and B" used in this specification and claims should be understood as "Only A is included, only B is included, or both A and B exist".

## Claims

1. A method for transmitting a sidelink positioning reference signal, SL PRS, applied to a first terminal, comprising:
acquiring (S101) a time-frequency resource configuration parameter of the SL PRS; and
determining (S102) a first resource based on the time-frequency resource configuration parameter,
wherein : the SL PRS and first indication information is transmitted on the first resource, wherein the first indication information is used to indicate transmission parameter information of the first resource,
wherein the first resource is determined from at least one of the following resource set:
a first preset dedicated resource pool; and
a physical sidelink shared channel, PSSCH, resource set;
wherein when the first resource is determined from the PSSCH resource set, the SL PRS and at least one of the following is transmitted on the first resource:
a physical sidelink shared channel demodulation reference signal, PSSCH DMRS;
first SCI used for the decoding of a PSSCH;
second SCI used to indicate a transmission parameter and/or positioning information of the SL PRS;
dedicated information used to indicate a transmission parameter and/or positioning information of the SL PRS;
a MAC CE used to indicate a transmission parameter and/or positioning information of the SL PRS;
RRC signaling used to indicate a transmission parameter and/or positioning information of the SL PRS; and
data information, wherein the data information is capable of being used to indicate positioning information;
wherein a mapping rule of the SL PRS on the first resource comprises at least one of the following:
an orthogonal frequency division multiplexing, OFDM, symbol carrying the SL PRS being only used for mapping the SL PRS;
not mapping the SL PRS to an OFDM symbol that comprises a first signal, wherein the first signal comprises part or all of the first SCI, the PSSCH DMRS, a channel state information reference signal, CSI RS, and a phase tracking reference signal, PTRS;
when a resource conflict occurs between the SL PRS and the PTRS, performing puncturing processing on the PTRS;
when a resource conflict occurs between the SL PRS and the data information, performing puncturing processing or rate matching processing on the data information; and
OFDM symbols carrying the SL PRS are consecutive in time domain,
wherein sequence initialization ID configuration information of the SL PRS in the time-frequency resource configuration parameter of the SL PRS is configured by using RRC signaling, or SL PRS sequence initialization ID in the time-frequency resource configuration parameter of the SL PRS is determined based on cyclic redundancy check, CRC, information of a first stage SCI.

2. The method for transmitting the SL PRS according to claim 1, wherein the time-frequency resource configuration parameter further comprises at least one of the following:
time domain symbol quantity configuration information of the SL PRS;
time domain symbol location configuration information of the SL PRS;
frequency domain pattern configuration information of the SL PRS;
first frequency domain starting PRB configuration information of the SL PRS;
frequency domain starting sub-channel configuration information of the SL PRS;
first frequency domain bandwidth configuration information of the SL PRS, wherein a granularity of a first frequency domain bandwidth is a sub-channel or a PRB; and
first period configuration information of the SL PRS.

3. The method for transmitting the SL PRS according to claim 1, wherein the first indication information is carried by using at least one of the following:
sidelink control information, SCI;
sidelink positioning information, SPI;
a media access control layer control element, MAC CE;
radio resource control, RRC, signaling;
a sidelink data packet;
a physical sidelink control channel, PSCCH;
a physical sidelink shared channel, PSSCH;
a physical sidelink broadcast channel, PSBCH;
a physical sidelink feedback channel, PSFCH;
a physical sidelink discover channel, PSDCH; and
a physical sidelink positioning channel, PSPCH.

4. The method for transmitting the SL PRS according to claim 1, wherein the transmission parameter information comprises at least one of the following:
a number of time domain symbols of the SL PRS;
a time domain symbol location of the SL PRS;
a frequency domain pattern of the SL PRS;
a first frequency domain starting PRB of the SL PRS;
a frequency domain starting subchannel of the SL PRS;
a first frequency domain bandwidth of the SL PRS;
a first period of the SL PRS;
a sequence initialization ID of the SL PRS; and
identity information of the SL PRS.

5. The method for transmitting the SL PRS according to claim 1, wherein when a plurality of first terminals share the first preset dedicated resource pool, the method comprises any one of the following:
matching a mapping location of the SL PRS and/or a code division multiplexing manner used by the SL PRS with a user identity of a first terminal or a second terminal, wherein the code division multiplexing manner is an orthogonal coverage code, OCC, or a cyclic shift, CS; or
matching a mapping location of the SL PRS and/or a code division multiplexing manner used by the SL PRS with a resource mapping location of SL PRS request signaling transmitted by a second terminal; or
transmitting the SL PRS and at least one of a PSCCH, a PSSCH, and a PSPCH in the first preset dedicated resource pool; or
transmitting the SL PRS in the first preset dedicated resource pool, and transmitting at least one of a PSCCH, a PSSCH, and a PSPCH in a remaining resource set of a slot in which the SL PRS is located or in a first slot spaced from the first preset dedicated resource pool by a preset quantity of time domain resources,
wherein the PSCCH, the PSSCH, or the PSPCH is used to carry user information indicating the first terminal and time-frequency resource information of the SL PRS, and the PSSCH or the PSPCH is further used to carry positioning information.

6. The method for transmitting the SL PRS according to claim 1, wherein when the first resource is determined from the PSSCH resource set, a first frequency domain bandwidth of the SL PRS meets at least one of the following conditions:
the first frequency domain bandwidth is the same as a third frequency domain bandwidth of the PSSCH resource set;
the first frequency domain bandwidth fully occupies a current resource pool;
the first frequency domain bandwidth spans a plurality of resource pools;
the first frequency domain bandwidth fully occupies an entire BWP; and
the first frequency domain bandwidth fully occupies an entire carrier.

7. The method for transmitting the SL PRS according to claim 2 or 4, wherein the first frequency domain starting PRB or the frequency domain starting sub-channel is determined based on any one of the following:
a starting PRB location of a resource pool;
a third frequency domain starting PRB location of a BWP;
a frequency domain location of a resource block grid common reference point Point A;
a starting PRB location of a PSCCH or a PSSCH; and
a starting PRB location of a carrier.

8. A method for receiving a sidelink positioning reference signal, SL PRS, applied to a second terminal, comprising:
acquiring (S1301) a time-frequency resource configuration parameter of the SL PRS; and
determining (S1302) a first resource based on the time-frequency resource configuration parameter,
wherein the SL PRS and first indication information is received on the first resource, wherein the first indication information is used to indicate transmission parameter information of the first resource,
wherein the first resource belongs to at least one of the following resource sets:
a first preset dedicated resource pool; and
a physical sidelink shared channel, PSSCH, resource set;
wherein when the first resource belongs to the PSSCH resource set, the SL PRS and at least one of the following is transmitted on the first resource:
a physical sidelink shared channel demodulation reference signal, PSSCH DMRS;
first SCI used for the decoding of a PSSCH;
second SCI used to indicate a transmission parameter and/or positioning information of the SL PRS;
dedicated information used to indicate a transmission parameter and/or positioning information of the SL PRS;
a MAC CE used to indicate a transmission parameter and/or positioning information of the SL PRS;
RRC signaling used to indicate a transmission parameter and/or positioning information of the SL PRS; and
data information, wherein the data information is capable of being used to indicate positioning information;
wherein a mapping rule of the SL PRS on the first resource comprises at least one of the following:
an orthogonal frequency division multiplexing, OFDM, symbol carrying the SL PRS being only used for mapping the SL PRS;
not mapping the SL PRS to an OFDM symbol that comprises a first signal, wherein the first signal comprises part or all of the first SCI, the PSSCH DMRS, a channel state information reference signal, CSI RS, and a phase tracking reference signal, PTRS;
when a resource conflict occurs between the SL PRS and the PTRS, performing puncturing processing on the PTRS;
when a resource conflict occurs between the SL PRS and the data information, performing puncturing processing or rate matching processing on the data information; and
OFDM symbols carrying the SL PRS are consecutive in time domain,
wherein sequence initialization ID configuration information of the SL PRS in the time-frequency resource configuration parameter of the SL PRS is configured by using RRC signaling, or SL PRS sequence initialization ID in the time-frequency resource configuration parameter of the SL PRS is determined based on cyclic redundancy check, CRC, information of a first stage SCI.

9. The method for receiving the SL PRS according to claim 8, wherein the first indication information is carried by using at least one of the following:
sidelink control information, SCI;
sidelink positioning information, SPI;
a media access control layer control element, MAC CE;
radio resource control, RRC, signaling;
a sidelink data packet;
a physical sidelink control channel, PSCCH;
a physical sidelink shared channel, PSSCH;
a physical sidelink broadcast channel, PSBCH;
a physical sidelink feedback channel, PSFCH;
a physical sidelink discover channel, PSDCH; and
a physical sidelink positioning channel, PSPCH.

10. The method for receiving the SL PRS according to claim 8, wherein the transmission parameter information comprises at least one of the following:
a number of time domain symbols of the SL PRS;
a time domain symbol location of the SL PRS;
a frequency domain pattern of the SL PRS;
a first frequency domain starting PRB of the SL PRS;
a frequency domain starting subchannel of the SL PRS;
a first frequency domain bandwidth of the SL PRS;
a first period of the SL PRS;
a sequence initialization ID of the SL PRS; and
identity information of the SL PRS.

11. An apparatus for transmitting a sidelink positioning reference signal, SL PRS, applied to a first terminal, comprising:
a first processing module (1401), configured to acquire a time-frequency resource configuration parameter of the SL PRS; and
a second processing module (1402), configured to: determine a first resource based on the time-frequency resource configuration parameter,
wherein: the SL PRS and first indication information is transmitted on the first resource, wherein the first indication information is used to indicate transmission parameter information of the first resource;
wherein the first resource is determined from at least one of the following resource set:
a first preset dedicated resource pool; and
a physical sidelink shared channel, PSSCH, resource set;
wherein when the first resource is determined from the PSSCH resource set, the SL PRS and at least one of the following is transmitted on the first resource:
a physical sidelink shared channel demodulation reference signal, PSSCH DMRS;
first SCI used for the decoding of a PSSCH;
second SCI used to indicate a transmission parameter and/or positioning information of the SL PRS;
dedicated information used to indicate a transmission parameter and/or positioning information of the SL PRS;
a MAC CE used to indicate a transmission parameter and/or positioning information of the SL PRS;
RRC signaling used to indicate a transmission parameter and/or positioning information of the SL PRS; and
data information, wherein the data information is capable of being used to indicate positioning information;
wherein a mapping rule of the SL PRS on the first resource comprises at least one of the following:
an orthogonal frequency division multiplexing, OFDM, symbol carrying the SL PRS being only used for mapping the SL PRS;
not mapping the SL PRS to an OFDM symbol that comprises a first signal, wherein the first signal comprises part or all of the first SCI, the PSSCH DMRS, a channel state information reference signal, CSI RS, and a phase tracking reference signal, PTRS;
when a resource conflict occurs between the SL PRS and the PTRS, performing puncturing processing on the PTRS;
when a resource conflict occurs between the SL PRS and the data information, performing puncturing processing or rate matching processing on the data information; and OFDM symbols carrying the SL PRS are consecutive in time domain,
wherein sequence initialization ID configuration information of the SL PRS in the time-frequency resource configuration parameter of the SL PRS is configured by using RRC signaling, or SL PRS sequence initialization ID in the time-frequency resource configuration parameter of the SL PRS is determined based on cyclic redundancy check, CRC, information of a first stage SCI.

12. An apparatus for receiving a sidelink positioning reference signal, SL PRS, applied to a second terminal, comprising:
a third processing module (1501), configured to acquire a time-frequency resource configuration parameter of the SL PRS; and
a fourth processing module (1502), configured to: determine a first resource based on the time-frequency resource configuration parameter,
wherein : the SL PRS and first indication information is received on the first resource, wherein the first indication information is used to indicate transmission parameter information of the first resource;
wherein the first resource belongs to at least one of the following resource sets:
a first preset dedicated resource pool; and
a physical sidelink shared channel, PSSCH, resource set;
wherein when the first resource belongs to the PSSCH resource set, the SL PRS and at least one of the following is transmitted on the first resource:
a physical sidelink shared channel demodulation reference signal, PSSCH DMRS;
first SCI used for the decoding of a PSSCH;
second SCI used to indicate a transmission parameter and/or positioning information of the SL PRS;
dedicated information used to indicate a transmission parameter and/or positioning information of the SL PRS;
a MAC CE used to indicate a transmission parameter and/or positioning information of the SL PRS;
RRC signaling used to indicate a transmission parameter and/or positioning information of the SL PRS; and
data information, wherein the data information is capable of being used to indicate positioning information;
wherein a mapping rule of the SL PRS on the first resource comprises at least one of the following:
an orthogonal frequency division multiplexing, OFDM, symbol carrying the SL PRS being only used for mapping the SL PRS;
not mapping the SL PRS to an OFDM symbol that comprises a first signal, wherein the first signal comprises part or all of the first SCI, the PSSCH DMRS, a channel state information reference signal, CSI RS, and a phase tracking reference signal, PTRS;
when a resource conflict occurs between the SL PRS and the PTRS, performing puncturing processing on the PTRS;
when a resource conflict occurs between the SL PRS and the data information, performing puncturing processing or rate matching processing on the data information; and
OFDM symbols carrying the SL PRS are consecutive in time domain,
wherein sequence initialization ID configuration information of the SL PRS in the time-frequency resource configuration parameter of the SL PRS is configured by using RRC signaling, or SL PRS sequence initialization ID in the time-frequency resource configuration parameter of the SL PRS is determined based on cyclic redundancy check, CRC, information of a first stage SCI.

## Patentansprüche

1. Ein Verfahren zum Senden eines Sidelink-Positionierungsreferenzsignals, SL-PRS, das auf ein erstes Endgerät angewendet wird, beinhaltend:
Erfassen (S101) eines Zeit-Frequenz-Ressourcenkonfigurationsparameters des SL-PRS; und
Bestimmen (S102) einer ersten Ressource auf der Basis des Zeit-Frequenz-Ressourcenkonfigurationsparameters,
wobei: das SL-PRS und erste Angabeinformationen auf der ersten Ressource gesendet werden, wobei die ersten Angabeinformationen verwendet werden, um Sendeparameterinformationen der ersten Ressource anzugeben,
wobei die erste Ressource aus mindestens einem der folgenden Ressourcensätze bestimmt wird:
einem ersten voreingestellten dedizierten Ressourcenpool; und
einem Ressourcensatz eines gemeinsam genutzten physikalischen Sidelink-Kanals, PSSCH;
wobei, wenn die erste Ressource aus dem PSSCH-Ressourcensatz bestimmt wird, das SL-PRS und mindestens eines der Folgenden auf der ersten Ressource gesendet werden:
ein Demodulationsreferenzsignal eines gemeinsam genutzten physikalischen Sidelink-Kanals, PSSCH-DMRS;
erste SCI, die zum Decodieren eines PSSCH verwendet werden;
zweite SCI, die verwendet werden, um einen Sendeparameter und/oder Positionierungsinformationen des SL-PRS anzugeben;
dedizierte Informationen, die verwendet werden, um einen Sendeparameter und/oder Positionierungsinformationen des SL-PRS anzugeben;
ein MAC-CE, das verwendet wird, um einen Sendeparameter und/oder Positionierungsinformationen des SL-PRS anzugeben;
RRC-Signalisierung, die verwendet wird, um einen Sendeparameter und/oder Positionierungsinformationen des SL-PRS anzugeben; und
Dateninformationen, wobei die Dateninformationen verwendet werden können, um Positionierungsinformationen anzugeben;
wobei eine Abbildungsregel des SL-PRS auf der ersten Ressource mindestens eines der Folgenden beinhaltet:
dass ein Symbol orthogonaler Frequenzmultiplexierung, OFDM, das das SL-PRS trägt, nur zum Abbilden des SL-PRS verwendet wird;
Nicht-Abbilden des SL-PRS auf ein OFDM-Symbol, das ein erstes Signal beinhaltet, wobei das erste Signal einen Teil oder alle von den ersten SCI, dem PSSCH-DMRS,
einem Kanalzustandsinformationsreferenzsignal, CSI-RS, und einem Phasenverfolgungsreferenzsignal, PTRS, beinhaltet;
wenn ein Ressourcenkonflikt zwischen dem SL-PRS und dem PTRS auftritt, Durchführen von Punktierungsverarbeitung an dem PTRS;
wenn ein Ressourcenkonflikt zwischen dem SL-PRS und den Dateninformationen auftritt, Durchführen von Punktierungsverarbeitung oder Ratenabgleichsverarbeitung an den Dateninformationen; und
OFDM-Symbole, die das SL-PRS tragen, sind im Zeitbereich aufeinanderfolgend,
wobei Sequenzinitialisierungs-ID-Konfigurationsinformationen des SL-PRS in dem Zeit-Frequenz-Ressourcenkonfigurationsparameter des SL-PRS unter Verwendung von RRC-Signalisierung konfiguriert werden oder die SL-PRS-Sequenzinitialisierungs-ID in dem Zeit-Frequenz-Ressourcenkonfigurationsparameter des SL-PRS auf der Basis von Informationen einer zyklischen Redundanzprüfung, CRC, von SCI einer ersten Stufe bestimmt wird.

2. Verfahren zum Senden des SL-PRS gemäß Anspruch 1, wobei der Zeit-Frequenz-Ressourcenkonfigurationsparameter ferner mindestens eines der Folgenden beinhaltet:
Zeitbereichssymbolmengenkonfigurationsinformationen des SL-PRS;
Zeitbereichssymbolortskonfigurationsinformationen des SL-PRS;
Frequenzbereichsmusterkonfigurationsinformationen des SL-PRS;
erste Frequenzbereichsstart-PRB-Konfigurationsinformationen des SL-PRS;
Frequenzbereichsstartunterkanalkonfigurationsinformationen des SL-PRS;
erste Frequenzbereichsbandbreitenkonfigurationsinformationen des SL-PRS, wobei
eine Granularität einer ersten Frequenzbereichsbandbreite ein Unterkanal oder ein PRB ist; und
erste Periodenkonfigurationsinformationen des SL-PRS.

3. Verfahren zum Senden des SL-PRS gemäß Anspruch 1, wobei die ersten Angabeinformationen unter Verwendung von mindestens einem der Folgenden getragen werden:
Sidelink-Steuerinformationen, SCI;
Sidelink-Positionierungsinformationen, SPI;
einem Medienzugriffssteuerschicht-Steuerelement, MAC-CE;
Funkressourcensteuersignalisierung, RRC-Signalisierung;
einem Sidelink-Datenpaket;
einem physikalischen Sidelink-Steuerkanal, PSCCH;
einem gemeinsam genutzten physikalischen Sidelink-Kanal, PSSCH;
einem physikalischen Sidelink-Rundfunkkanal, PSBCH;
einem physikalischen Sidelink-Rückkopplungskanal, PSFCH;
einem physikalischen Sidelink-Entdeckungskanal, PSDCH; und
einem physikalischen Sidelink-Positionierungskanal, PSPCH.

4. Verfahren zum Senden des SL-PRS gemäß Anspruch 1, wobei die Sendeparameterinformationen mindestens eines der Folgenden beinhalten:
eine Anzahl von Zeitbereichssymbolen des SL-PRS;
einen Zeitbereichssymbolort des SL-PRS;
ein Frequenzbereichsmuster des SL-PRS;
einen ersten Frequenzbereichsstart-PRB des SL-PRS;
einen Frequenzbereichsstartunterkanal des SL-PRS;
eine erste Frequenzbereichsbandbreite des SL-PRS;
eine erste Periode des SL-PRS;
eine Sequenzinitialisierungs-ID des SL-PRS; und
Identitätsinformationen des SL-PRS.

5. Verfahren zum Senden des SL-PRS gemäß Anspruch 1, wobei, wenn eine Vielzahl von ersten Endgeräten den ersten voreingestellten dedizierten Ressourcenpool gemeinsam nutzen, das Verfahren eines der Folgenden beinhaltet:
Abgleichen eines Abbildungsortes des SL-PRS und/oder einer Codemultiplexweise, die durch das SL-PRS verwendet wird, mit einer Benutzeridentität eines ersten Endgeräts oder eines zweiten Endgeräts, wobei die Codemultiplexweise ein orthogonaler Abdeckungscode, OCC, oder eine zyklische Verschiebung, CS, ist; oder
Abgleichen eines Abbildungsortes des SL-PRS und/oder einer Codemultiplexweise, die durch das SL-PRS verwendet wird, mit einem Ressourcenabbildungsort von SL-PRS-Anforderungssignalisierung, die durch ein zweites Endgerät gesendet wird; oder
Senden des SL-PRS und von mindestens einem von einem PSCCH, einem PSSCH und einem PSPCH in dem ersten voreingestellten dedizierten Ressourcenpool; oder Senden des SL-PRS in dem ersten voreingestellten dedizierten Ressourcenpool und
Senden von mindestens einem von einem PSCCH, einem PSSCH und einem PSPCH in einem verbleibenden Ressourcensatz eines Schlitzes, in dem sich das SL-PRS befindet, oder in einem ersten Schlitz, der von dem ersten voreingestellten dedizierten Ressourcenpool um eine voreingestellte Menge von Zeitbereichsressourcen beabstandet ist,
wobei der PSCCH, der PSSCH oder der PSPCH verwendet wird, um Benutzerinformationen, die das erste Endgerät angeben, und Zeit-Frequenz-Ressourceninformationen des SL-PRS zu tragen, und der PSSCH oder der PSPCH ferner verwendet wird, um Positionierungsinformationen zu tragen.

6. Verfahren zum Senden des SL-PRS gemäß Anspruch 1, wobei, wenn die erste Ressource aus dem PSSCH-Ressourcensatz bestimmt wird, eine erste Frequenzbereichsbandbreite des SL-PRS mindestens eine der folgenden Bedingungen erfüllt:
die erste Frequenzbereichsbandbreite ist die gleiche wie eine dritte Frequenzbereichsbandbreite des PSSCH-Ressourcensatzes;
die erste Frequenzbereichsbandbreite belegt einen aktuellen Ressourcenpool vollständig;
die erste Frequenzbereichsbandbreite überspannt eine Vielzahl von Ressourcenpools;
die erste Frequenzbereichsbandbreite belegt einen gesamten BWP vollständig; und
die erste Frequenzbereichsbandbreite belegt einen gesamten Träger vollständig.

7. Verfahren zum Senden des SL-PRS gemäß Anspruch 2 oder 4, wobei der erste Frequenzbereichsstart-PRB oder der Frequenzbereichsstartunterkanal auf der Basis eines der Folgenden bestimmt wird:
eines Start-PRB-Ortes eines Ressourcenpools;
eines dritten Frequenzbereichsstart-PRB-Ortes eines BWP;
eines Frequenzbereichsortes eines gemeinsamen Referenzpunktes Punkt A eines Ressourcenblockrasters;
eines Start-PRB-Ortes eines PSCCH oder eines PSSCH; und
eines Start-PRB-Ortes eines Trägers.

8. Ein Verfahren zum Empfangen eines Sidelink-Positionierungsreferenzsignals, SL-PRS, das auf ein zweites Endgerät angewendet wird, beinhaltend:
Erfassen (S1301) eines Zeit-Frequenz-Ressourcenkonfigurationsparameters des SL-PRS; und
Bestimmen (S1302) einer ersten Ressource auf der Basis des Zeit-Frequenz-Ressourcenkonfigurationsparameters,
wobei das SL-PRS und erste Angabeinformationen auf der ersten Ressource empfangen werden, wobei die ersten Angabeinformationen verwendet werden, um Sendeparameterinformationen der ersten Ressource anzugeben,
wobei die erste Ressource zu mindestens einem der folgenden Ressourcensätze gehört:
einem ersten voreingestellten dedizierten Ressourcenpool; und
einem Ressourcensatz eines gemeinsam genutzten physikalischen Sidelink-Kanals, PSSCH;
wobei, wenn die erste Ressource zu dem PSSCH-Ressourcensatz gehört, das SL-PRS und mindestens eines der Folgenden auf der ersten Ressource gesendet werden:
ein Demodulationsreferenzsignal eines gemeinsam genutzten physikalischen Sidelink-Kanals, PSSCH-DMRS;
erste SCI, die zum Decodieren eines PSSCH verwendet werden;
zweite SCI, die verwendet werden, um einen Sendeparameter und/oder Positionierungsinformationen des SL-PRS anzugeben;
dedizierte Informationen, die verwendet werden, um einen Sendeparameter und/oder Positionierungsinformationen des SL-PRS anzugeben;
ein MAC-CE, das verwendet wird, um einen Sendeparameter und/oder Positionierungsinformationen des SL-PRS anzugeben;
RRC-Signalisierung, die verwendet wird, um einen Sendeparameter und/oder Positionierungsinformationen des SL-PRS anzugeben; und
Dateninformationen, wobei die Dateninformationen verwendet werden können, um Positionierungsinformationen anzugeben;
wobei eine Abbildungsregel des SL-PRS auf der ersten Ressource mindestens eines der Folgenden beinhaltet:
dass ein Symbol orthogonaler Frequenzmultiplexierung, OFDM, das das SL-PRS trägt, nur zum Abbilden des SL-PRS verwendet wird;
Nicht-Abbilden des SL-PRS auf ein OFDM-Symbol, das ein erstes Signal beinhaltet, wobei das erste Signal einen Teil oder alle von den ersten SCI, dem PSSCH-DMRS,
einem Kanalzustandsinformationsreferenzsignal, CSI-RS, und einem Phasenverfolgungsreferenzsignal, PTRS, beinhaltet;
wenn ein Ressourcenkonflikt zwischen dem SL-PRS und dem PTRS auftritt, Durchführen von Punktierungsverarbeitung an dem PTRS;
wenn ein Ressourcenkonflikt zwischen dem SL-PRS und den Dateninformationen auftritt, Durchführen von Punktierungsverarbeitung oder Ratenabgleichsverarbeitung in den Dateninformationen; und
OFDM-Symbole, die das SL-PRS tragen, sind im Zeitbereich aufeinanderfolgend,
wobei Sequenzinitialisierungs-ID-Konfigurationsinformationen des SL-PRS in dem Zeit-Frequenz-Ressourcenkonfigurationsparameter des SL-PRS unter Verwendung von RRC-Signalisierung konfiguriert werden oder die SL-PRS-Sequenzinitialisierungs-ID in dem Zeit-Frequenz-Ressourcenkonfigurationsparameter des SL-PRS auf der Basis von Informationen einer zyklischen Redundanzprüfung, CRC, von SCI einer ersten Stufe bestimmt wird.

9. Verfahren zum Empfangen des SL-PRS gemäß Anspruch 8, wobei die ersten Angabeinformationen unter Verwendung von mindestens einem der Folgenden getragen werden:
Sidelink-Steuerinformationen, SCI;
Sidelink-Positionierungsinformationen, SPI;
einem Medienzugriffssteuerschicht-Steuerelement, MAC-CE;
Funkressourcensteuersignalisierung, RRC-Signalisierung;
einem Sidelink-Datenpaket;
einem physikalischen Sidelink-Steuerkanal, PSCCH;
einem gemeinsam genutzten physikalischen Sidelink-Kanal, PSSCH;
einem physikalischen Sidelink-Rundfunkkanal, PSBCH;
einem physikalischen Sidelink-Rückkopplungskanal, PSFCH;
einem physikalischen Sidelink-Entdeckungskanal, PSDCH; und
einem physikalischen Sidelink-Positionierungskanal, PSPCH.

10. Verfahren zum Empfangen des SL-PRS gemäß Anspruch 8, wobei die Sendeparameterinformationen mindestens eines der Folgenden beinhalten:
eine Anzahl von Zeitbereichssymbolen des SL-PRS;
einen Zeitbereichssymbolort des SL-PRS;
ein Frequenzbereichsmuster des SL-PRS;
einen ersten Frequenzbereichsstart-PRB des SL-PRS;
einen Frequenzbereichsstartunterkanal des SL-PRS;
eine erste Frequenzbereichsbandbreite des SL-PRS;
eine erste Periode des SL-PRS;
eine Sequenzinitialisierungs-ID des SL-PRS; und
Identitätsinformationen des SL-PRS.

11. Ein Gerät zum Senden eines Sidelink-Positionierungsreferenzsignals, SL-PRS, das auf ein erstes Endgerät angewendet wird, beinhaltend:
ein erstes Verarbeitungsmodul (1401), das konfiguriert ist, um einen Zeit-Frequenz-Ressourcenkonfigurationsparameter des SL-PRS zu erfassen; und
ein zweites Verarbeitungsmodul (1402), das konfiguriert ist, um: eine erste Ressource auf der Basis des Zeit-Frequenz-Ressourcenkonfigurationsparameters zu bestimmen,
wobei: das SL-PRS und erste Angabeinformationen auf der ersten Ressource gesendet werden, wobei die ersten Angabeinformationen verwendet werden, um Sendeparameterinformationen der ersten Ressource anzugeben;
wobei die erste Ressource aus mindestens einem der folgenden Ressourcensätze bestimmt wird:
einem ersten voreingestellten dedizierten Ressourcenpool; und
einem Ressourcensatz eines gemeinsam genutzten physikalischen Sidelink-Kanals, PSSCH;
wobei, wenn die erste Ressource aus dem PSSCH-Ressourcensatz bestimmt wird, das SL-PRS und mindestens eines der Folgenden auf der ersten Ressource gesendet werden:
ein Demodulationsreferenzsignal eines gemeinsam genutzten physikalischen Sidelink-Kanals, PSSCH-DMRS;
erste SCI, die zum Decodieren eines PSSCH verwendet werden;
zweite SCI, die verwendet werden, um einen Sendeparameter und/oder Positionierungsinformationen des SL-PRS anzugeben;
dedizierte Informationen, die verwendet werden, um einen Sendeparameter und/oder Positionierungsinformationen des SL-PRS anzugeben;
ein MAC-CE, das verwendet wird, um einen Sendeparameter und/oder Positionierungsinformationen des SL-PRS anzugeben;
RRC-Signalisierung, die verwendet wird, um einen Sendeparameter und/oder Positionierungsinformationen des SL-PRS anzugeben; und
Dateninformationen, wobei die Dateninformationen verwendet werden können, um Positionierungsinformationen anzugeben;
wobei eine Abbildungsregel des SL-PRS auf der ersten Ressource mindestens eines der Folgenden beinhaltet:
dass ein Symbol orthogonaler Frequenzmultiplexierung, OFDM, das das SL-PRS trägt, nur zum Abbilden des SL-PRS verwendet wird;
Nicht-Abbilden des SL-PRS auf ein OFDM-Symbol, das ein erstes Signal beinhaltet, wobei das erste Signal einen Teil oder alle von den ersten SCI, dem PSSCH-DMRS,
einem Kanalzustandsinformationsreferenzsignal, CSI-RS, und einem Phasenverfolgungsreferenzsignal, PTRS, beinhaltet;
wenn ein Ressourcenkonflikt zwischen dem SL-PRS und dem PTRS auftritt, Durchführen von Punktierungsverarbeitung an dem PTRS;
wenn ein Ressourcenkonflikt zwischen dem SL-PRS und den Dateninformationen auftritt, Durchführen von Punktierungsverarbeitung oder Ratenabgleichsverarbeitung an den Dateninformationen; und OFMD-Symbole, die das SL-PRS tragen, sind im Zeitbereich aufeinanderfolgend,
wobei Sequenzinitialisierungs-ID-Konfigurationsinformationen des SL-PRS in dem Zeit-Frequenz-Ressourcenkonfigurationsparameter des SL-PRS unter Verwendung von RRC-Signalisierung konfiguriert werden oder die SL-PRS-Sequenzinitialisierungs-ID in dem Zeit-Frequenz-Ressourcenkonfigurationsparameter des SL-PRS auf der Basis von Informationen einer zyklischen Redundanzprüfung, CRC, von SCI einer ersten Stufe bestimmt wird.

12. Eine Gerät zum Empfangen eines Sidelink-Positionierungsreferenzsignals, SL-PRS, das auf ein zweites Endgerät angewendet wird, beinhaltend:
ein drittes Verarbeitungsmodul (1501), das konfiguriert ist, um einen Zeit-Frequenz-Ressourcenkonfigurationsparameter des SL-PRS zu erfassen; und
ein viertes Verarbeitungsmodul (1502), das konfiguriert ist, um: eine erste Ressource auf der Basis des Zeit-Frequenz-Ressourcenkonfigurationsparameters zu bestimmen, wobei: das SL-PRS und erste Angabeinformationen auf der ersten Ressource empfangen werden, wobei die ersten Angabeinformationen verwendet werden, um Sendeparameterinformationen der ersten Ressource anzugeben;
wobei die erste Ressource zu mindestens einem der folgenden Ressourcensätze gehört:
einem ersten voreingestellten dedizierten Ressourcenpool; und
einem Ressourcensatz eines gemeinsam genutzten physikalischen Sidelink-Kanals, PSSCH;
wobei, wenn die erste Ressource zu dem PSSCH-Ressourcensatz gehört, das SL-PRS und mindestens eines der Folgenden auf der ersten Ressource gesendet werden:
ein Demodulationsreferenzsignal eines gemeinsam genutzten physikalischen Sidelink-Kanals, PSSCH-DMRS;
erste SCI, die zum Decodieren eines PSSCH verwendet werden;
zweite SCI, die verwendet werden, um einen Sendeparameter und/oder Positionierungsinformationen des SL-PRS anzugeben;
dedizierte Informationen, die verwendet werden, um einen Sendeparameter und/oder Positionierungsinformationen des SL-PRS anzugeben;
ein MAC-CE, das verwendet wird, um einen Sendeparameter und/oder Positionierungsinformationen des SL-PRS anzugeben;
RRC-Signalisierung, die verwendet wird, um einen Sendeparameter und/oder Positionierungsinformationen des SL-PRS anzugeben; und
Dateninformationen, wobei die Dateninformationen verwendet werden können, um Positionierungsinformationen anzugeben;
wobei eine Abbildungsregel des SL-PRS auf der ersten Ressource mindestens eines der Folgenden beinhaltet:
dass ein Symbol orthogonaler Frequenzmultiplexierung, OFDM, das das SL-PRS trägt, nur zum Abbilden des SL-PRS verwendet wird;
Nicht-Abbilden des SL-PRS auf ein OFDM-Symbol, das ein erstes Signal beinhaltet, wobei das erste Signal einen Teil oder alle von den ersten SCI, dem PSSCH-DMRS,
einem Kanalzustandsinformationsreferenzsignal, CSI-RS, und einem Phasenverfolgungsreferenzsignal, PTRS, beinhaltet;
wenn ein Ressourcenkonflikt zwischen dem SL-PRS und dem PTRS auftritt, Durchführen von Punktierungsverarbeitung an dem PTRS;
wenn ein Ressourcenkonflikt zwischen dem SL-PRS und den Dateninformationen auftritt, Durchführen von Punktierungsverarbeitung oder Ratenabgleichsverarbeitung an den Dateninformationen; und
OFDM-Symbole, die das SL-PRS tragen, sind im Zeitbereich aufeinanderfolgend,
wobei Sequenzinitialisierungs-ID-Konfigurationsinformationen des SL-PRS in dem Zeit-Frequenz-Ressourcenkonfigurationsparameter des SL-PRS unter Verwendung von RRC-Signalisierung konfiguriert werden oder die SL-PRS-Sequenzinitialisierungs-ID in dem Zeit-Frequenz-Ressourcenkonfigurationsparameter des SL-PRS auf der Basis von Informationen einer zyklischen Redundanzprüfung, CRC, von SCI einer ersten Stufe bestimmt wird.

## Revendications

1. Un procédé de transmission d'un signal de référence de positionnement de liaison latérale, SL PRS (*sidelink positioning reference signal*)*,* appliqué à un premier terminal, comprenant :
l'acquisition (S101) d'un paramètre de configuration de ressources temporelles-fréquentielles du SL PRS ; et
la détermination (S102) d'une première ressource sur la base du paramètre de configuration de ressources temporelles-fréquentielles,
où : le SL PRS et des premières informations d'indication sont transmis sur la première ressource, où les premières informations d'indication sont utilisées pour indiquer des informations de paramètre de transmission de la première ressource,
où la première ressource est déterminée à partir d'au moins un des ensembles de ressources suivants :
un premier groupe de ressources dédiées prédéfini ; et
un ensemble de ressources de canal partagé de liaison latérale physique, PSSCH (*physical sidelink shared channel*) ;
où, lorsque la première ressource est déterminée à partir de l'ensemble de ressources PSSCH, le SL PRS et au moins l'un des suivants est transmis sur la première ressource :
un signal de référence de démodulation de canal partagé de liaison latérale physique, PSSCH DMRS (*physical sidelink shared channel demodulation reference signal*) ;
des premières SCI utilisées pour le décodage d'un PSSCH ;
des deuxièmes SCI utilisées pour indiquer un paramètre de transmission et/ou des informations de positionnement du SL PRS ;
des informations dédiées utilisées pour indiquer un paramètre de transmission et/ou des informations de positionnement du SL PRS ;
un MAC CE utilisé pour indiquer un paramètre de transmission et/ou des informations de positionnement du SL PRS ;
une signalisation RRC utilisée pour indiquer un paramètre de transmission et/ou des informations de positionnement du SL PRS ; et
des informations de données, où les informations de données peuvent être utilisées pour indiquer des informations de positionnement ;
où une règle de mappage du SL PRS sur la première ressource comprend au moins l'un des suivants :
un symbole de multiplexage par répartition orthogonale de la fréquence, OFDM *(orthogonal frequency division multiplexing),* transportant le SL PRS qui est uniquement utilisé pour mapper le SL PRS ;
le non mappage du SL PRS à un symbole OFDM qui comprend un premier signal, où le premier signal comprend partiellement ou totalement les premières SCI, le PSSCH DMRS, un signal de référence d'information d'état du canal, CSI RS *(channel state information reference signal),* et un signal de référence de suivi de phase, PTRS *(phase tracking reference signal) ;*
lorsqu'un conflit relatif aux ressources se produit entre le SL PRS et le PTRS, la réalisation d'un traitement de perforation sur le PTRS ;
lorsqu'un conflit relatif aux ressources se produit entre le SL PRS et les informations de données, la réalisation d'un traitement de perforation ou d'un traitement de mise en correspondance de débit sur les informations de données ; et
des symboles OFDM transportant le SL PRS sont consécutifs dans le domaine temporel,
où des informations de configuration d'ID d'initialisation de séquence du SL PRS dans le paramètre de configuration de ressources temporelles-fréquentielles du SL PRS sont configurées en utilisant une signalisation RRC, ou une ID d'initialisation de séquence de SL PRS dans le paramètre de configuration de ressources temporelles-fréquentielles du SL PRS est déterminée sur la base d'informations de contrôle de redondance cyclique, CRC *(cyclic redundancy check),* de SCI d'un premier étage.

2. Le procédé de transmission du SL PRS selon la revendication 1, où le paramètre de configuration de ressources temporelles-fréquentielles comprend en outre au moins une sorte d'informations parmi les suivantes :
des informations de configuration de quantité de symboles dans le domaine temporel du SL PRS ;
des informations de configuration d'emplacement de symboles dans le domaine temporel du SL PRS ;
des informations de configuration de motif dans le domaine fréquentiel du SL PRS ;
des premières informations de configuration de PRB de départ dans le domaine fréquentiel du SL PRS ;
des informations de configuration de sous-canal de départ dans le domaine fréquentiel du SL PRS ;
des informations de configuration de première largeur de bande dans le domaine fréquentiel du SL PRS, où une granularité d'une première largeur de bande dans le domaine fréquentiel est un sous-canal ou un PRB ; et
des informations de configuration de première période du SL PRS.

3. Le procédé de transmission du SL PRS selon la revendication 1, où les premières informations d'indication sont transportées en utilisant au moins l'un des suivants :
des informations de commande de liaison latérale, SCI *(sidelink control information) ;*
des informations de positionnement de liaison latérale, SPI *(sidelink positioning information) ;*
un élément de commande de couche de commande d'accès au support, MAC CE *(media access control layer control element) ;*
une signalisation de commande de ressources radio, RRC *(radio resource control) ;*
un paquet de données de liaison latérale ;
un canal de commande de liaison latérale physique, PSCCH *(physical sidelink control channel) ;*
un canal partagé de liaison latérale physique, PSSCH ;
un canal de diffusion de liaison latérale physique, PSBCH *(physical sidelink broadcast channel) ;*
un canal de rétroaction de liaison latérale physique, PSFCH *(physical sidelink feedback channel) ;*
un canal de découverte de liaison latérale physique, PSDCH *(physical sidelink discover channel) ;* et
un canal de positionnement de liaison latérale physique, PSPCH *(physical sidelink positioning channel).*

4. Le procédé de transmission du SL PRS selon la revendication 1, où les informations de paramètre de transmission comprennent au moins l'un des suivants :
un nombre de symboles dans le domaine temporel du SL PRS ;
un emplacement de symboles dans le domaine temporel du SL PRS ;
un motif dans le domaine fréquentiel du SL PRS ;
un premier PRB de départ dans le domaine fréquentiel du SL PRS ;
un sous-canal de départ dans le domaine fréquentiel du SL PRS ;
une première largeur de bande dans le domaine fréquentiel du SL PRS ;
une première période du SL PRS ;
une ID d'initialisation de séquence du SL PRS ; et
des informations d'identité du SL PRS.

5. Le procédé de transmission du SL PRS selon la revendication 1, où lorsqu'une pluralité de premiers terminaux partagent le premier groupe de ressources dédiées prédéfini, le procédé comprend une quelconque action parmi les suivantes :
la mise en correspondance d'un emplacement de mappage du SL PRS et/ou d'une méthode de multiplexage par répartition en code utilisée par le SL PRS avec une identité d'utilisateur d'un premier terminal ou d'un deuxième terminal, où la méthode de multiplexage par répartition en code est un code de couverture orthogonal, OCC *(orthogonal coverage code),* ou un décalage cyclique, CS *(cyclic shift)* ; ou
la mise en correspondance d'un emplacement de mappage du SL PRS et/ou d'une méthode de multiplexage par répartition en code utilisée par le SL PRS avec un emplacement de mappage de ressources d'une signalisation de demande de SL PRS transmise par un deuxième terminal ; ou
la transmission du SL PRS et d'au moins l'un parmi un PSCCH, un PSSCH, et un PSPCH dans le premier groupe de ressources dédiées prédéfini ; ou
la transmission du SL PRS dans le premier groupe de ressources dédiées prédéfini, et la transmission d'au moins l'un parmi un PSCCH, un PSSCH, et un PSPCH dans un ensemble de ressources restantes d'un créneau dans lequel le SL PRS est situé ou dans un premier créneau espacé du premier groupe de ressources dédiées prédéfini par une quantité prédéfinie de ressources dans le domaine temporel,
où le PSCCH, le PSSCH, ou le PSPCH est utilisé pour transporter des informations d'utilisateur indiquant le premier terminal et des informations de ressources temporelles-fréquentielles du SL PRS, et le PSSCH ou le PSPCH est en outre utilisé pour transporter des informations de positionnement.

6. Le procédé de transmission du SL PRS selon la revendication 1, où, lorsque la première ressource est déterminée à partir de l'ensemble de ressources PSSCH, une première largeur de bande dans le domaine fréquentiel du SL PRS satisfait au moins à une des conditions suivantes :
la première largeur de bande dans le domaine fréquentiel est la même qu'une troisième largeur de bande dans le domaine fréquentiel de l'ensemble de ressources PSSCH ;
la première largeur de bande dans le domaine fréquentiel occupe entièrement un groupe de ressources actuel ;
la première largeur de bande dans le domaine fréquentiel couvre une pluralité de groupes de ressources ;
la première largeur de bande dans le domaine fréquentiel occupe entièrement une BWP dans sa totalité ; et
la première largeur de bande dans le domaine fréquentiel occupe entièrement une porteuse dans sa totalité.

7. Le procédé de transmission du SL PRS selon la revendication 2 ou la revendication 4,
où le premier PRB de départ dans le domaine fréquentiel ou le sous-canal de départ dans le domaine fréquentiel est déterminé sur la base d'un quelconque emplacement parmi les suivants :
un emplacement de PRB de départ d'un groupe de ressources ;
un troisième emplacement de PRB de départ dans le domaine fréquentiel d'une BWP ;
un emplacement dans le domaine fréquentiel d'un point A de point de référence commun de grille de bloc de ressources ;
un emplacement de PRB de départ d'un PSCCH ou d'un PSSCH ; et
un emplacement de PRB de départ d'une porteuse.

8. Un procédé de réception d'un signal de référence de positionnement de liaison latérale, SL PRS, appliqué à un deuxième terminal, comprenant :
l'acquisition (S1301) d'un paramètre de configuration de ressources temporelles-fréquentielles du SL PRS ; et
la détermination (S1302) d'une première ressource sur la base du paramètre de configuration de ressources temporelles-fréquentielles,
où le SL PRS et des premières informations d'indication sont reçus sur la première ressource, où les premières informations d'indication sont utilisées pour indiquer des informations de paramètre de transmission de la première ressource,
où la première ressource appartient à au moins un des ensembles de ressources suivants :
un premier groupe de ressources dédiées prédéfini ; et
un ensemble de ressources de canal partagé de liaison latérale physique, PSSCH ; où, lorsque la première ressource appartient à l'ensemble de ressources PSSCH, le SL PRS et au moins l'un des suivants est transmis sur la première ressource :
un signal de référence de démodulation de canal partagé de liaison latérale physique, PSSCH DMRS ;
des premières SCI utilisées pour le décodage d'un PSSCH ;
des deuxièmes SCI utilisées pour indiquer un paramètre de transmission et/ou des informations de positionnement du SL PRS ;
des informations dédiées utilisées pour indiquer un paramètre de transmission et/ou des informations de positionnement du SL PRS ;
un MAC CE utilisé pour indiquer un paramètre de transmission et/ou des informations de positionnement du SL PRS ;
une signalisation RRC utilisée pour indiquer un paramètre de transmission et/ou des informations de positionnement du SL PRS ; et
des informations de données, où les informations de données peuvent être utilisées pour indiquer des informations de positionnement ;
où une règle de mappage du SL PRS sur la première ressource comprend au moins l'un des suivants :
un symbole de multiplexage par répartition orthogonale de la fréquence, OFDM, transportant le SL PRS qui est uniquement utilisé pour mapper le SL PRS ;
le non mappage du SL PRS à un symbole OFDM qui comprend un premier signal, où le premier signal comprend partiellement ou totalement les premières SCI, le PSSCH DMRS, un signal de référence d'information d'état du canal, CSI RS, et un signal de référence de suivi de phase, PTRS ;
lorsqu'un conflit relatif aux ressources se produit entre le SL PRS et le PTRS, la réalisation d'un traitement de perforation sur le PTRS ;
lorsqu'un conflit relatif aux ressources se produit entre le SL PRS et les informations de données, la réalisation d'un traitement de perforation ou d'un traitement de mise en correspondance de débit sur les informations de données ; et
des symboles OFDM transportant le SL PRS sont consécutifs dans le domaine temporel,
où des informations de configuration d'ID d'initialisation de séquence du SL PRS dans le paramètre de configuration de ressources temporelles-fréquentielles du SL PRS sont configurées en utilisant une signalisation RRC, ou une ID d'initialisation de séquence de SL PRS dans le paramètre de configuration de ressources temporelles-fréquentielles du SL PRS est déterminée sur la base d'informations de contrôle de redondance cyclique, CRC, de SCI d'un premier étage.

9. Le procédé de réception du SL PRS selon la revendication 8, où les premières informations d'indication sont transportées en utilisant au moins l'un des suivants :
des informations de commande de liaison latérale, SCI ;
des informations de positionnement de liaison latérale, SPI ;
un élément de commande de couche de commande d'accès au support, MAC CE ;
une signalisation de commande de ressources radio, RRC ;
un paquet de données de liaison latérale ;
un canal de commande de liaison latérale physique, PSCCH ;
un canal partagé de liaison latérale physique, PSSCH ;
un canal de diffusion de liaison latérale physique, PSBCH ;
un canal de rétroaction de liaison latérale physique, PSFCH ;
un canal de découverte de liaison latérale physique, PSDCH ; et
un canal de positionnement de liaison latérale physique, PSPCH.

10. Le procédé de réception du SL PRS selon la revendication 8, où les informations de paramètre de transmission comprennent au moins l'un des suivants :
un nombre de symboles dans le domaine temporel du SL PRS ;
un emplacement de symboles dans le domaine temporel du SL PRS ;
un motif dans le domaine fréquentiel du SL PRS ;
un premier PRB de départ dans le domaine fréquentiel du SL PRS ;
un sous-canal de départ dans le domaine fréquentiel du SL PRS ;
une première largeur de bande dans le domaine fréquentiel du SL PRS ;
une première période du SL PRS ;
une ID d'initialisation de séquence du SL PRS ; et
des informations d'identité du SL PRS.

11. Un appareil de transmission d'un signal de référence de positionnement de liaison latérale, SL PRS, appliqué à un premier terminal, comprenant :
un premier module de traitement (1401), configuré pour acquérir un paramètre de configuration de ressources temporelles-fréquentielles du SL PRS ; et
un deuxième module de traitement (1402), configuré pour : déterminer une première ressource sur la base du paramètre de configuration de ressources temporelles-fréquentielles,
où : le SL PRS et des premières informations d'indication sont transmis sur la première ressource, où les premières informations d'indication sont utilisées pour indiquer des informations de paramètre de transmission de la première ressource ;
où la première ressource est déterminée à partir d'au moins un des ensembles de ressources suivants :
un premier groupe de ressources dédiées prédéfini ; et
un ensemble de ressources de canal partagé de liaison latérale physique, PSSCH ; où, lorsque la première ressource est déterminée à partir de l'ensemble de ressources PSSCH, le SL PRS et au moins l'un des suivants est transmis sur la première ressource :
un signal de référence de démodulation de canal partagé de liaison latérale physique, PSSCH DMRS ;
des premières SCI utilisées pour le décodage d'un PSSCH ;
des deuxièmes SCI utilisées pour indiquer un paramètre de transmission et/ou des informations de positionnement du SL PRS ;
des informations dédiées utilisées pour indiquer un paramètre de transmission et/ou des informations de positionnement du SL PRS ;
un MAC CE utilisé pour indiquer un paramètre de transmission et/ou des informations de positionnement du SL PRS ;
une signalisation RRC utilisée pour indiquer un paramètre de transmission et/ou des informations de positionnement du SL PRS ; et
des informations de données, où les informations de données peuvent être utilisées pour indiquer des informations de positionnement ;
où une règle de mappage du SL PRS sur la première ressource comprend au moins l'un des suivants :
un symbole de multiplexage par répartition orthogonale de la fréquence, OFDM,
transportant le SL PRS qui est uniquement utilisé pour mapper le SL PRS ;
le non mappage du SL PRS à un symbole OFDM qui comprend un premier signal, où le premier signal comprend partiellement ou totalement les premières SCI, le PSSCH DMRS, un signal de référence d'information d'état du canal, CSI RS, et un signal de référence de suivi de phase, PTRS ;
lorsqu'un conflit relatif aux ressources se produit entre le SL PRS et le PTRS, la réalisation d'un traitement de perforation sur le PTRS ;
lorsqu'un conflit relatif aux ressources se produit entre le SL PRS et les informations de données, la réalisation d'un traitement de perforation ou d'un traitement de mise en correspondance de débit sur les informations de données ; et des symboles OFDM transportant le SL PRS sont consécutifs dans le domaine temporel,
où des informations de configuration d'ID d'initialisation de séquence du SL PRS dans le paramètre de configuration de ressources temporelles-fréquentielles du SL PRS sont configurées en utilisant une signalisation RRC, ou une ID d'initialisation de séquence de SL PRS dans le paramètre de configuration de ressources temporelles-fréquentielles du SL PRS est déterminée sur la base d'informations de contrôle de redondance cyclique, CRC, de SCI d'un premier étage.

12. Un appareil de réception d'un signal de référence de positionnement de liaison latérale, SL PRS, appliqué à un deuxième terminal, comprenant :
un troisième module de traitement (1501), configuré pour acquérir un paramètre de configuration de ressources temporelles-fréquentielles du SL PRS ; et
un quatrième module de traitement (1502), configuré pour : déterminer une première ressource sur la base du paramètre de configuration de ressources temporelles-fréquentielles,
où : le SL PRS et des premières informations d'indication sont reçus sur la première ressource, où les premières informations d'indication sont utilisées pour indiquer des informations de paramètre de transmission de la première ressource ;
où la première ressource appartient à au moins un des ensembles de ressources suivants :
un premier groupe de ressources dédiées prédéfini ; et
un ensemble de ressources de canal partagé de liaison latérale physique, PSSCH ;
où, lorsque la première ressource appartient à l'ensemble de ressources PSSCH, le SL PRS et au moins l'un des suivants est transmis sur la première ressource :
un signal de référence de démodulation de canal partagé de liaison latérale physique, PSSCH DMRS ;
des premières SCI utilisées pour le décodage d'un PSSCH ;
des deuxièmes SCI utilisées pour indiquer un paramètre de transmission et/ou des informations de positionnement du SL PRS ;
des informations dédiées utilisées pour indiquer un paramètre de transmission et/ou des informations de positionnement du SL PRS ;
un MAC CE utilisé pour indiquer un paramètre de transmission et/ou des informations de positionnement du SL PRS ;
une signalisation RRC utilisée pour indiquer un paramètre de transmission et/ou des informations de positionnement du SL PRS ; et
des informations de données, où les informations de données peuvent être utilisées pour indiquer des informations de positionnement ;
où une règle de mappage du SL PRS sur la première ressource comprend au moins l'un des suivants :
un symbole de multiplexage par répartition orthogonale de la fréquence, OFDM, transportant le SL PRS qui est uniquement utilisé pour mapper le SL PRS ;
le non mappage du SL PRS à un symbole OFDM qui comprend un premier signal, où le premier signal comprend partiellement ou totalement les premières SCI, le PSSCH DMRS, un signal de référence d'information d'état du canal, CSI RS, et un signal de référence de suivi de phase, PTRS ;
lorsqu'un conflit relatif aux ressources se produit entre le SL PRS et le PTRS, la réalisation d'un traitement de perforation sur le PTRS ;
lorsqu'un conflit relatif aux ressources se produit entre le SL PRS et les informations de données, la réalisation d'un traitement de perforation ou d'un traitement de mise en correspondance de débit sur les informations de données ; et
des symboles OFDM transportant le SL PRS sont consécutifs dans le domaine temporel,
où des informations de configuration d'ID d'initialisation de séquence du SL PRS dans le paramètre de configuration de ressources temporelles-fréquentielles du SL PRS sont configurées en utilisant une signalisation RRC, ou une ID d'initialisation de séquence de SL PRS dans le paramètre de configuration de ressources temporelles-fréquentielles du SL PRS est déterminée sur la base d'informations de contrôle de redondance cyclique, CRC, de SCI d'un premier étage.
